# FASCICULE DE BREVET EUROPEEN

(11) **EP 0 397 581 B1**
(45) Date de publication et mention de la délivrance du brevet: **02.03.1994**
(21) Numéro de dépôt: 90420171.2
(22) Date de dépôt: 04.04.1990
(51) Int. Cl.: C08G 73/12, C08G 77/42

(54) **Polymères à groupements imide à base de maléimides dont un bismaléimide siloxane et de diamines aromatiques et leur procédé de préparation**
Imidgruppen enthaltende Polymere, die aus Maleimiden, von denen eines ein Bismaleimidsiloxan ist, und aromatischen Diaminen hergestellt werden und Herstellungsverfahren
Imide groups containing polymers made from maleimides (of which one is a bismaleimide siloxane), and aromatic diamines and process of preparation

(30) Priorité: 10.04.1989 FR 8904936
(43) Date de publication de la demande: 14.11.1990
(73) Titulaire: CIBA-GEIGY AG, 4002 Basel (CH)
(72) Inventeur: Camberlin, Yves, F-69300 Caluire (FR); Michaud, Philippe, F-69006 Lyon (FR)

(56) Documents cités:
- EP-A- 0 206 383
- EP-A- 0 284 524

## Description

Dans la demande de brevet français FR-A-2 612 196 on a décrit et revendiqué des polymères comportant des groupements imide qui sont obtenus en faisant réagir un ou plusieurs N,N'-bis-maléimide(s) conventionnel(s) du type de ceux décrits dans le brevet français FR-A-1 555 564 avec une ou plusieurs diamine(s) biprimaire(s) aromatique(s), en présence d'un N,N'-bis-maléimide particulier renfermant dans sa structure un groupement diorganopolysiloxane et éventuellement d'un autre réactif copolymérisable et/ou d'un catalyseur.

Vis-à-vis des polyimides obtenus selon le brevet français FR-A-1 555 564 par chauffage d'un N,N'-bis-maléimide conventionnel, comme par exemple le N,N'-4,4'-diphénylméthane-bis-maléimide, et d'une diamine aromatique, on a constaté que l'ajout dans le milieu de polymérisation d'un N,N'-bis-maléimide renfermant dans sa structure un groupement diorganopolysiloxane est une mesure permettant notamment d'améliorer les propriétés de résistance au choc des polymères durcis.

Poursuivant des travaux dans le domaine de la conception de polyaminobismaléimides à la fois résilients et utilisables plus particulièrement d'une part pour la réalisation de pièces selon la technique de l'enroulement filamentaire et d'autre part pour la réalisation d'articles intermédiaires préimprégnés en utilisant la technique de l'imprégnation de matériaux fibreux à l'aide des prépolymères à l'état fondu (technique dite hot melt), la Demanderesse a mis au point des prépolymères polyaminobismaléimides thermodurcissables dont la préparation fait appel à des N,N'-bis-maléimides dont un N,N'-bis-maléimide refermant dans sa structure un groupement diorganopolysiloxane et qui présentent des viscosités à l'état fondu dont la valeur (très faible) et l'évolution au cours du temps sont parfaitement adaptées aux types de transformation correspondant à l'enroulement filamentaire et à l'imprégnation sans solvant.

Il a maintenant été trouvé, et c'est ce qui constitue l'objet de la présente invention, que de pareils prépolymères peuvent être obtenus par ajout, dans un milieu de polymérisation comprenant des N,N'-bis-maléimides dont un N,N'-bis-maléimide siloxane et au moins une diamine biprimaire aromatique, d'un actif supplémentaire particulier consistant soit dans un réactif acrylate, soit dans une résine époxy non halogénée.

Plus précisément, la présente invention concerne des prépolymères thermodurcissables à groupements imide, présentant une viscosité à l'état fondu comprise entre 0,1 Pa.s et 50 Pa.s et
mesuré à 80°C avec un viscosimètre RHEOMAT 30 de la Société CONTRAVES équipé d'un mobile tournant sous un gradiant de 13 s⁻¹, qui comprennent le produit de réaction en milieu liquide homogène, a une température allant de 50°C à 180°C, entre:
- (a) un N,N'-bis-maléimide ou une association de plusieurs bis-maléimides de formule: 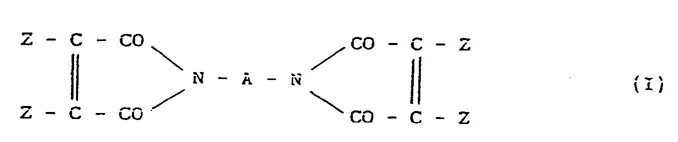 dans laquelle :
   . les symboles Z, identiques ou diférents, représentent chacun H, CH₃ ou Cl ;
   . le symbol A représente un radical divalent choisi dans le groupe constitué par les radicaux : cyclohexylènes ; phénylènes ; méthyl-4 phénylène-1,3 ; méthyl-2-phénylène-1,3 ; méthyl-5-phénylène-1,3 ; diéthyl-2,5 méthyl-3 phénylène-1,4 ; et les radicaux de formule : 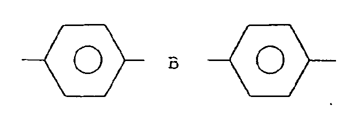 dans laquelle B rprésente un lien valentiel simple ou un groupement :
      - CH₂ - ; 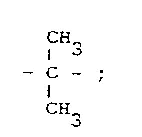 - O - ; 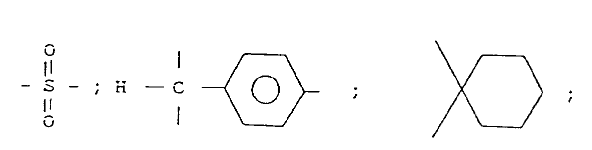 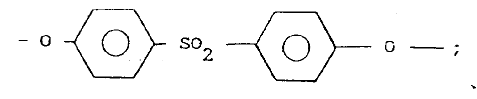
- (b) un N, N'-bis-maléimide renfermant dans sa structure un groupement diorganopolysiloxane ;
- (c) une ou plusieurs diamine(s) biprimaire(s) aromatique(s) ;
- éventuellement (d) un ou plusieurs monomère(s) qui consistent les espèces suivantes:
   * (d1) soit un ou plusieurs monomère(s) de formule : 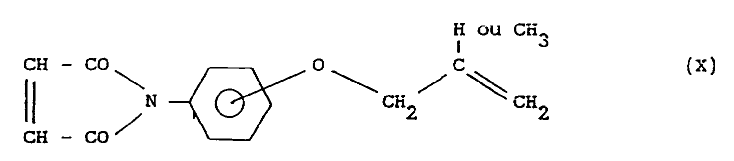 dans laquelle le radical allyloxy ou méthallyloxy est en position ortho, métha ou para par rapport à l'atome de carbone du cycle benzénique relié à l'azote ;
   * (d2) soit un composé comprenant :
      - un mélange d'un monomère de formule : 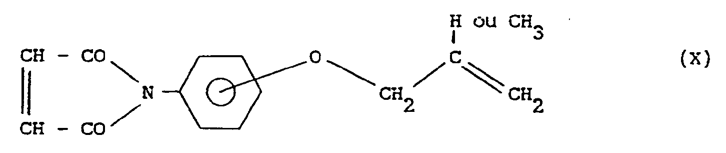 dans laquelle le radical allyloxy ou méthallyloxy est en position ortho, méta ou para par rapport à l'atome de carbone du cycle benzénique relié à l'azote.
         - avec :
      - au moins un dérivé monosubstitué de formule : 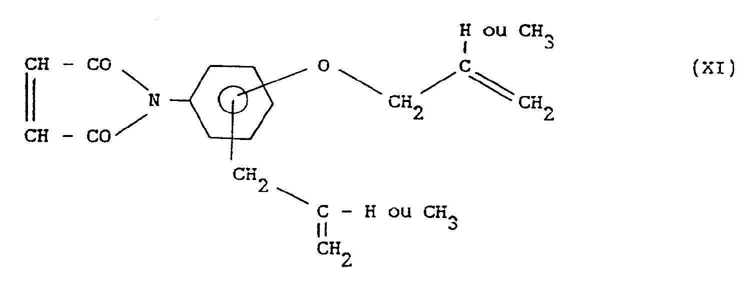
      - et éventuellement un ou plusieurs dérivé(s) disubstitué(s) de formule : 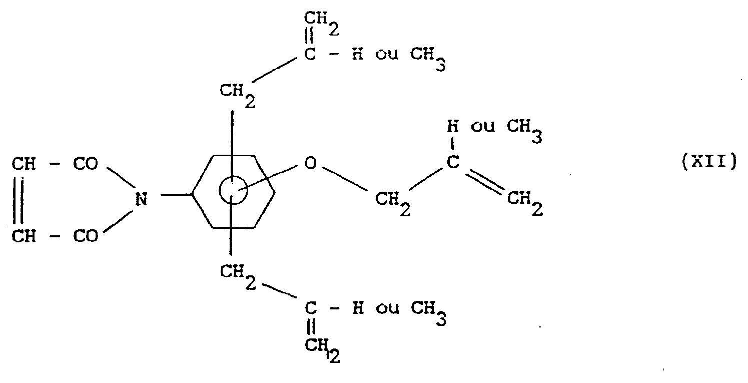
   * (d3) soit un ou plusieurs hétérocycle(s) substitué(s) qui sont choisis parmi: les vinylpyridines, la N-vinylpyrrolidone, l'isocyanurate d'allyle, le triallylisocyanurate, le vinyltétrahydrofuranne, et leurs mélange,
- éventuellement encore (e) un catalyseur ;

lesdits prépolymères à groupements imide étant caractérisés par les points suivants :
. Point 1 : on utilise comme réactif (b) un N,N'-bis-maléimide à groupement diorganopolysiloxane répondant à la formule générale : 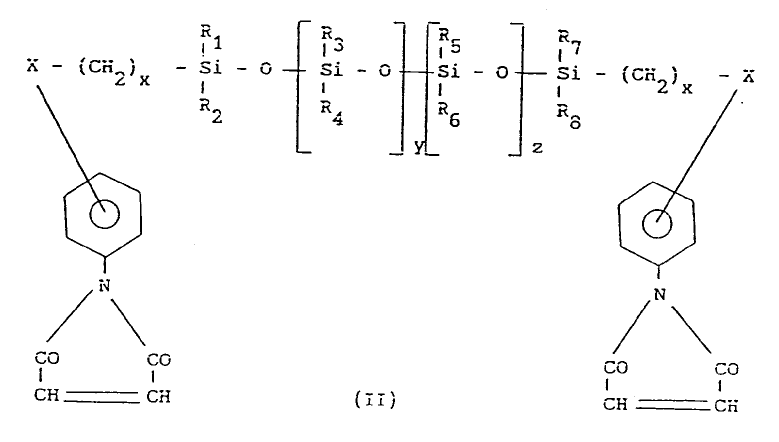 dans laquelle :
   - X, qui est est position ortho, méta ou para par rapport à l'atome de carbone du cycle benzénique relié à l'azote, représente un lien valentiel simple ou un atome ou un groupement suivant :
      - O - ; - S - ; 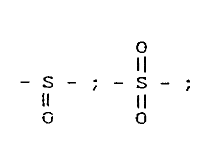
   - R₁, R₂, R₃, R₄, R₅, R₆, R₇, R₈, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement -CN ; un radical phényle éventuellement substitué par un ou plusieurs radicaux alkyles et/ou alkoxy ayant de 1 à 4 atomes de carbone ou par un ou plusieurs atomes de chlore ;
   - le symbole x est un nombre entier situé dans l'intervalle allant de 2 à 8,
   - les symboles y et z représentent des nombres, identiques ou différents, entiers ou fractionnaires, dont la somme se situe dans l'intervalle allant de 0 à 100 ;
. Point 2 : on utilise comme réactif (c) une ou plusieurs diamine(s) biprimaire(s) prise(s) dans le groupe formé par :
   * (c1) les espèces répondant à la formule générale :

      H₂N - D - NH₂ (III)

      dans laquelle le symbole D représente l'un des radicaux divalents que représente le symbole A de la formule (I), les symboles A et D contenus dans un même polymère pouvant être identiques ou différents entre eux ;
   * (c2) les espèces répondant à la formule générale : 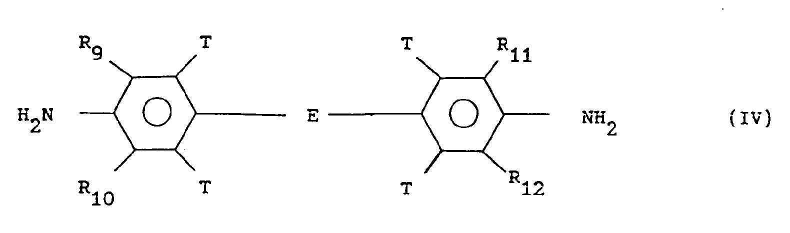 dans laquelle :
      . les symboles R₉, R₁₀, R₁₁ et R₁₂, identiques ou différents, représentent chacun un radical méthyle, éthyle, propyle ou isopropyle ;
      . les symboles T, identiques ou différents, représentent chacun un atome d'hydrogène ou un atome de chlore ;
      . le symbole E représente un radical divalent choisi dans le groupe formé par les radicaux :
         -CH₂- ; 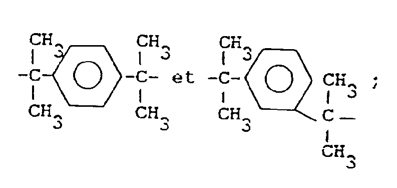
   * et (C3) les espèces répondant à la formule générale : 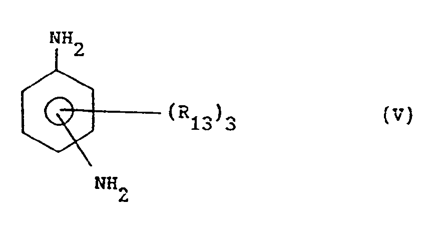 dans laquelle :
      . les radicaux amino sont en position méta ou para, l'un par rapport à l'autre **;**
      . les symboles R₁₃ identiques ou différents, représentent chacun un radical méthyle, éthyle, propyle ou isopropyle ;
. Point 3 : le milieu de réaction qui sert à préparer les prépolymères selon la présente invention contient en outre un additif obligatoire (f) consistant soit dans un réactif acrylate (f1), soit dans une résine époxy non halogénée (f2) :
   - ledit réactif acrylate (f1) consistant lui-même dans un ou plusieurs composé(s) de formule générale : 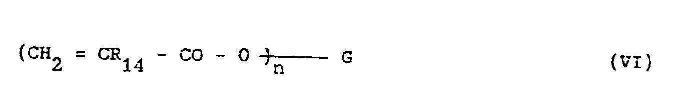 dans laquelle :
      . le symbole R₁₄ représente un atome d'hydrogène ou un radical méthyle ;
      . n représente un nombre entier ou fractionnaire au moins égal à 1 et au plus égal à 8 ;
      . le symbole G représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa structure un ou plusieurs pont(s) oxygène et/ou une ou plusieurs fonction(s) hydroxyle(s) libre(s), le (ou les) valence(s) libre(s) du radical G aromatique pouvant être portée(s) par un atome de carbone d'une chaîne aliphatique et/ou par un atome de carbone d'un noyau benzénique ;
   - ladite résine époxy non halogéné (f2) consistant elle-même dans une résine époxy qui possède un poids d'aquivalent époxy compris entre 100 et 500 et qui consiste dans un éther glycidique obtenu en faisant réagir avec de l'épichlorhydrine un polyphénol divalent choisi dans le groupe formé par : la famille des bis(hydroxyphényl)alcanes comme le bis (hydroxy-4 phényl)-2,2 propane, le bis(hydroxy-4 phényl) méthane, le bis (hydroxy-4 phényl) méthyl-phényl-méthane, les bis(hydroxy-4 phényl) tolyl-méthanes ; le résorcinol ; l'hydroquinone ; le pyrocatéchol ; le dihydroxy-4,4' diphényle ; et les produits de condensation des phénols précités avec un aldéhyde, et où les prépolymères son caractérisés en ce que:
      . d'une part: on choisit les quantités de réactifs (a) et (c) de manière à avoir, en poids par rapport au poids total de ces constituants:
         - de 50 à 98 % de bis-maléimide(s) (a) de formule (I),
         - de 2 à 50 % de diamine(s) (c) de formules (III), (IV) et/ou (V),
      . et d'autre part: s'agissant de la quantité de bis-maléimide siloxane (b) de formule (II), elle représente de 5 à 40 % du poids total des réactifs (a) + (c),
      . la quantité du réactif facultatif (d), quand on en utilise un, représente moins de 60 % du poids total des réactifs (a) + (c),
      . le catalyseur facultatif (e), quand on en utilise un, est employé à un taux se situant dans l'intervalle allant de 0,01 à 1 % en poids par rapport à l'ensemble des réactifs (a) + (b) + (c) + éventuellemnt (d) et
      . l'additif obligatoire (f) est utilisé en quantité représentant de 1 à 60 % du poids de l'ensemble des constituants (a) + (b) + (c) + (f) + éventuellement (d).
   - le N,N'-méthyl-5 phénylène-1,3-bis-maléimide.

Ces bis-maléimides peuvent être préparés selon les procédés décrits dans le brevet américain US-A-3 018 290 et le brevet anglais GB-A-1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A propos des bis-maléimides siloxanes (b) de formule (II), lorsque y et/ou z sont supérieurs à 1, on est en présence d'un composé à structure polymère et on a rarement un seul composé, mais le plus souvent un mélange de composés de même structure chimique, qui différent par le nombre d'unités récurrentes de leur molécule ; cela conduit à une valeur moyenne de y et/ou z qui peut être entière ou fractionnaire.

Quand la préparation des prépolymères selon l'invention est effectuée, selon les indications données ci-après, au sein d'un diluant ou solvant organique, on peut utiliser l'un quelconque des composés de formule (II).

Comme bis-maléimides qui conviennent, on peut citer ceux qui répondent à la formule (II) dans laquelle :
1) X = - O - ; R₁ = R₂ = R₃ = R₄ = R₅ = R₆ = R₇ = R₈ = radical alkyle linéaire ayant de 1 à 3 atomes de carbone ; x = 2, 3 ou 4 ; y + z se situe dans l'intervalle allant de 0 à 100 et, de préférence, de 4 à 70.
2) X = - O - ; R₁ = R₂ = R₃ = R₄ = R₇ = R₈ = radical alkyle linéaire ayant de 1 à 3 atomes de carbone ; R₅ = R₆ radical phényle ; x = 2, 3 ou 4; y + z se situe dans l'intervalle allant de 0 à 100 et, de préférence, de 4 à 70.
3) X = - O - ; R₁ = R₂ = R₇ = R₈ = radical alkyle linéaire ayant de 1 à 3 atomes de carbone ; R₃ = R₄ = R₅ = R₆ = radical phényle ; x = 2, 3 ou 4 ; y + z se situe dans l'intervalle allant de 0 à 100 et, de préférence, de 4 à 70.
4) X = - O - ; R₁ = R₂ = R₃ = R₅ = R₇ = R₈ = radical alkyle linéaire ayant de 1 à 3 atomes de carbone ; R₄ = R₆ = radical phényle ; x = 2, 3 ou 4 ; y + z se situe dans l'intervalle allant de 0 à 100 et, de préférence, de 4 à 70.
5) X = - O - ; R₁ = R₃ = R₅ = R₇ = radical alkyle linéaire ayant de 1 à 3 atomes de carbone ; R₂ = R₄ = R₆ = R₈ = radical phényle ; x = 2, 3 ou 4 ; y + z se situe dans l'intervalle allant de 0 à 100 et, de préférence, de 4 à 70.

Comme exemples spécifiques de bis-maléimides siloxanes (b) qui conviennent on citera notamment :
6) 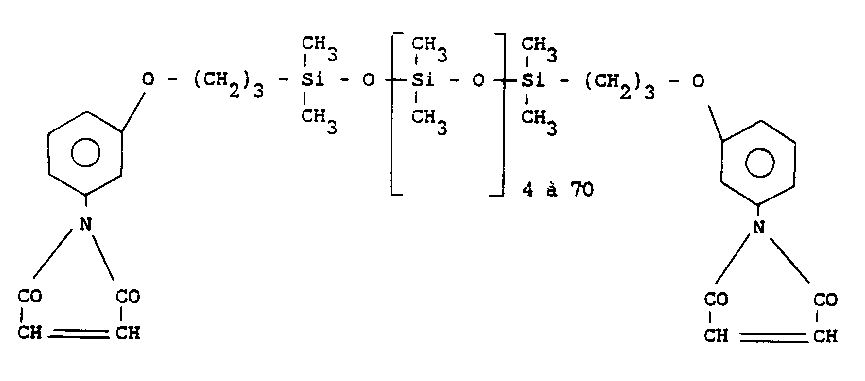
7) 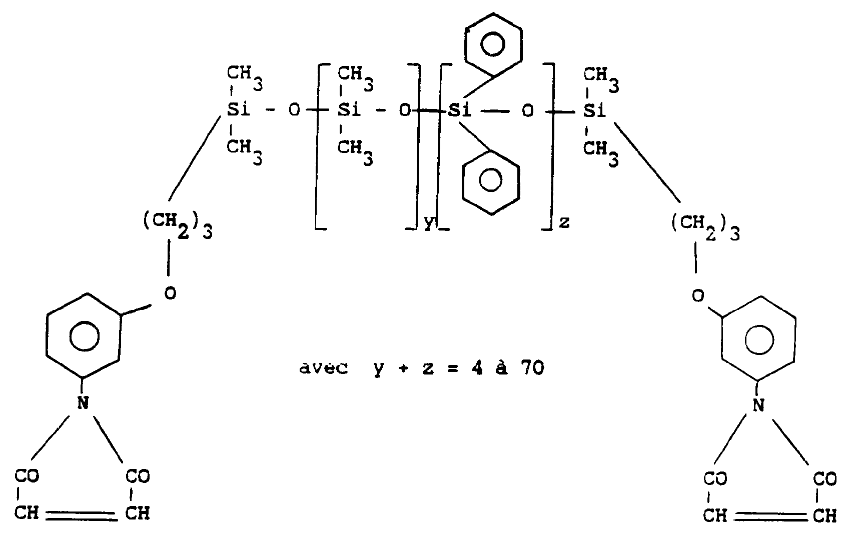
8) 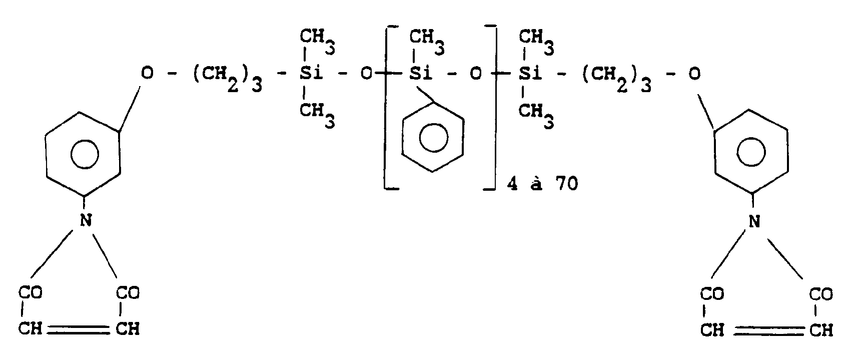
9)

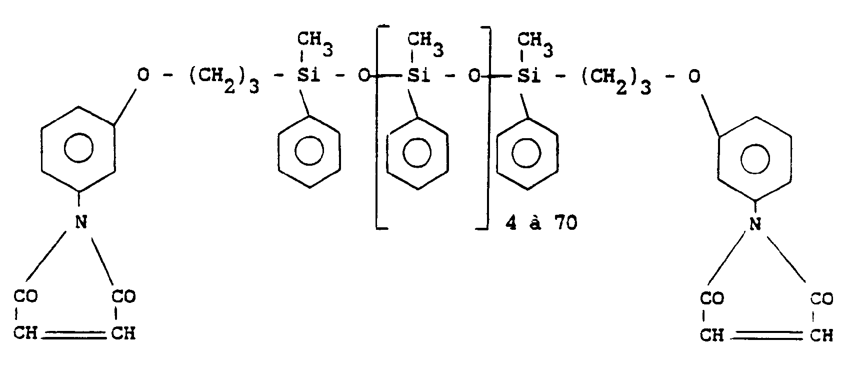

Quand la préparation des polymères selon l'invention est effectuée en masse, on utilise de préférence comme bis-maléimides de formule (II) ceux où le groupement diorganopolysiloxane renferme une pluralité de liaisons Si-phényle ou Si-phényle substitué. Des bis-maléimides de ce type qui conviennent particulièrement bien sont ceux appartenant aux groupes suivants, classés par ordre croissant de préférence :
- bis-maléimides n° 2, 3, 4 et 5 ;
- bis-maléimides n° 7, 8 et 9.

Les bis-maléimides siloxane de formule (II) sont des composés qui sont obtenus en faisant réagir l'anhydride maléique, en présence d'un agent déshydratant, d'une amine tertiaire, d'un diluant organique et d'un catalyseur, sur une diamine à groupement diorganopolysiloxane de formule : 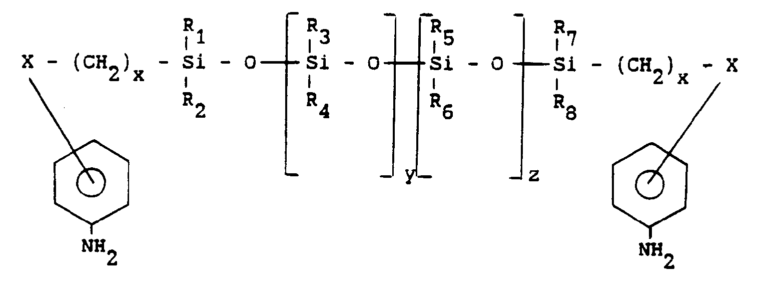
dans laquelle X, R₁, R₂, R₃, R₄, R₅, R₆, R₇, R₈, x, y et z ont les significations données ci-avant pour la formule (II). Pour avoir plus de détails sur ces bis-maléimides siloxanes et sur leur procédé de préparation, on pourra se reporter en particulier au contenu de la demande de brevet français FR-A-2 611 728.

A titre d'exemples spécifiques de diamines (c1) de formule (III), on peut citer en particulier :
- la paraphénylène diamine,
- la métaphénylène diamine,
- le diamino-4,4' diphénylméthane,
- le bis(amino-4 phényl)-2,2 propane,
- la benzidine,
- l'oxyde de bis-(amino-4 phényl),
- la diamine-4,4' diphénylsulfone.

On utilise de préférence pour la mise en oeuvre de la présente invention, le diamino-4,4' diphénylméthane.

A titres d'exemples spécifiques de diamines encombrées (c2) et (c3) de formules (IV) et (V), on peut citer en particulier :
- le diamino-4,4' tétraméthyl-3,3', 5,5' diphénylméthane,
- le diamino-4,4' tétraéthyl-3,3', 5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis(amino-4 diméthyl-3,5 α,α diméthylbenzyl)-1,4 benzène,
- le bis(amino-4 diméthyl-3,5 α,α diméthylbenzyl)-1,3 benzène,
- le diamino-1,3 diéthyl-2,4 méthyl-6 benzène,
- le diamino-1,3 méthyl-2 diéthyl-4,6 benzène.

Ces diamines encombrées peuvent être préparées selon les procédés décrits dans le brevet anglais GB-A-852 651 et le brevet américain US-A-3 481 900. On utilise de préférence, pour la mise en oeuvre de la présente invention, le diamino-4,4' tétraméthyl-3,3',5,5' diphénylméthane, le diamino-4,4' tétraéthyl-3,3',5,5' diphénylméthane, le diamino-4,4' diéthyl-3,3' diméthyl-5,5' diphénylméthane et leurs mélanges.

A titre de réactif acrylate (f1) qui convient, on peut citer :
* (f1.1) les mono(méth)acrylates correspondant à la formule (VI) dans laquelle :
   . n = 1, et
   . G représente un radical organique monovalent de formule : 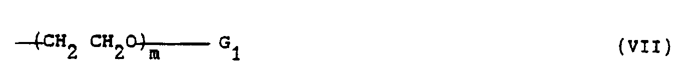
   dans laquelle : G₁ représente un radical alkyle, linéaire ou ramifié, ayant de 1 à 6 atomes de carbone ou un radical phényle ; et m est un nombre entier égal à zéro, 1, 2, 3, 4 ou 5 ;
* (f1.2) les di(méth)acrylates correspondant à la formule (VI) dans laquelle :
   . n = 2, et
   . G représente un radical organique divalent de formule : 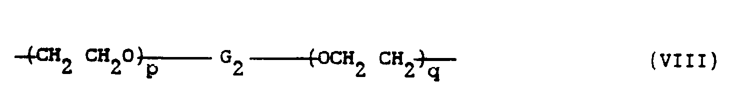
   dans laquelle : G₂ représente un radical divalent alkylène, linéaire ou ramifié, ayant de 2 à 9 atomes de carbone et pouvant renfermer un ou plusieurs pont(s) oxygène ou un radical de formule 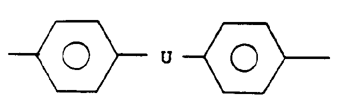 dans laquelle le symbole U représente un lien valentiel simple ou un groupement :
   -CH₂-, -CH₂-CH₂, -CH(CH₃)CH₂-, 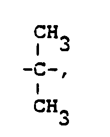 -O-, 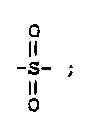 les symboles p et q, identiques ou différents, représentent chacun un nombre entier égal à zéro, 1, 2, 3, 4 ou 5 ;
* (f1.3) les tri- et tétra(méth)acrylates correspondant à la formule (VI) dans laquelle :
   . n = 3 ou 4, et
   . G représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;
* (f1.4) les (méth)acrylates d'époxy novolaques qui, tout en correspondant à la formule (VI), sont représentés ici par la formule suivante : 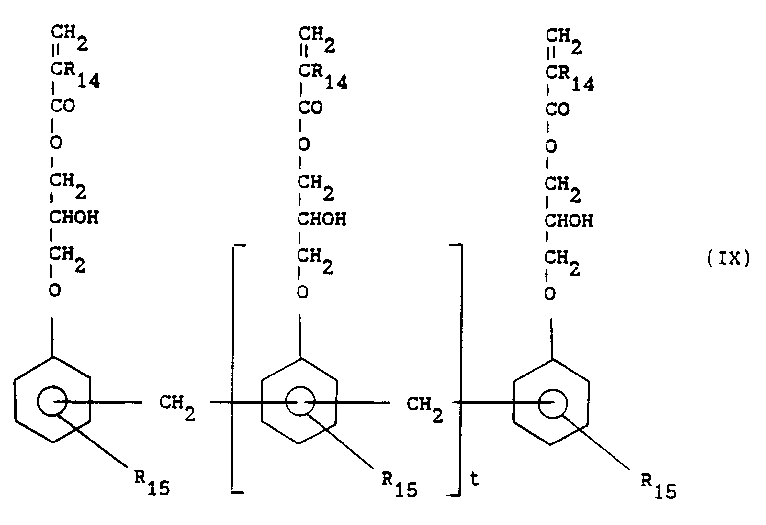 dans laquelle :
   . le symbole R₁₄ a la signification donnée ci-avant à propos de la formule (VI) ;
   . le symbole R₁₅ représente un atome d'hydrogène ou un radical méthyle ;
   . t est un nombre entier ou fractionnaire se situant dans l'intervalle allant de 0,1 à 7 ;
* (f1.5) des mélanges de plusieurs acrylates et/ou méthacrylates d'un même type[ (f1.1), (f1.2), (f1.3) ou (f1.4)] entre eux ou des mélanges d'un ou plusieurs acrylate(s) et/ou méthacrylate(s) d'un même type avec un ou plusieurs acrylate(s) et/ou méthacrylate(s) d'un autre type.

A titre d'exemples spécifiques de réactif acrylate (f1.1) qui conviennent bien, on peut citer en particulier : les mono(méth)acrylates de méthyle ; les mono(méth)acrylates de phénol(mono-oxyéthylé) ; les mono(méth)acrylates de phénol (di-oxyéthylé).

A titre d'exemples spécifiques de réactif acrylate (f1.2) qui conviennent bien, on peut citer : les di(méth)acrylates d'éthylèneglycol ; les di(méth)acrylates de butanediol-1,4 ; les di(méth)acrylates d'hexanediaol-1,6 ; les di(méth)acrylates de tripropylèneglycol ; les di(méth)acrylates des diphénols, di (mono- ou poly-oxyéthylés) ou non, suivants : le dihydroxy-4,4'-diphénylméthane, le bisphénol A, le dihydroxy-4,4'-diphényléther et en particulier les di(méth)acrylates de bisphénol A di(mono-oxyéthylé) ou les di(méh)acrylates de bisphénol A di (di-oxyéthylé) [cf. formule (VIII) dans laquelle G₂ représente le radical : 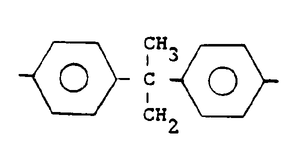
et p = q = 1 ou 2].

A titre d'exemples spécifiques de réactif acrylate (f1.3) qui conviennent bien, on peut citer en particulier : les tri(méth)acrylates de butanetriol-1,2,4 ; les tri(méth)acrylates d'hexanetriol-1,2,6 ; les tri(méth)acrylates de triméthylolpropane ; les tri(méth)acrylates de pentaérythritol ; les tétra(méth)acrylates de pentaérythritol.

Les (méth)acrylates d'époxy novolaques (f1.4) sont des produits connus dont certains sont disponibles dans le commerce. Ils peuvent être préparés en faisant réagir les acides (méth)acryliques avec une résine époxy de type novolaque, cette dernière étant le produit de réaction d'épichlorhydrine et de polycondensats phénol/formol[dans la formule (IX) donnée ci-avant R₁₅ est alors une atome d'hydrogène] ou de polycondensats crésol/formol[ dans la formule R₁₅ est alors un radical méthyle]. Ces polyacrylates oligomères (f1.4) et un procédé pour les préparer se trouvent décrits par exemple dans le brevet américain US-A-3.535.403.

A titre d'exemples spécifiques de réactif acrylate (f1.4) qui conviennent bien, on peut citer en particulier les acrylates d'époxy novolaques de formule (IX) dans laquelle R₁₄ et R₁₅ représentent un atome d'hydrogène et t est un nombre entier ou fractionnaire se situant dans l'intervalle allant de 0,1 à 5.

A titre d'exemples spécifiques de réactif acrylate (f1.5) qui conviennent bien, on peut citer les mélanges des (méth)acrylates d'époxy novolaques (f1.4) avec au plus 30 % en poids, par rapport au poids du mélange (f1.4) + (f1.3), d'un triacrylate et/ou d'un triméthacrylate répondant aux définitions données ci-avant à propos du réactif acrylate (f1.3) et en particulier les mélanges des acrylates d'époxy novolaques convenant bien, juste cités ci-avant, avec au plus 25 % en poids, par rapport au poids du mélange, d'un triacrylate et/ou d'un triméthacrylate convenant bien choisi parmi ceux juste cités ci-avant.

Le réactif acrylate (f1) qui est utilisé de manière très préférentielle est pris dans le groupe formé par : les di(méth)acrylates de bisphénol A di(mono-oxyéthylé) ; les di(méth)acrylates de bisphénol A di(di-oxyéthylé) ; les acrylates d'époxy novolaques de formule (IX) dans laquelle R₁₄ et R₁₅ représentent un atome d'hydrogène et t est un nombre entier ou fractionnaire se situant dans l'intervalle allant de 0,1 à 5, ces composés étant pris seuls ou en mélange avec au plus 25 % en poids, par rapport au poids du mélange, de triacrylate de triméthylolpropane.

S'agissant de la résine époxy (f2), l'expression "poids d'équivalent époxy", qui apparaît ci-avant, peut-être définie comme le poids de résine (en gramme) renfermant une fonction époxy 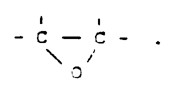
On choisit de préférence une résine époxy possédant un poids d'équivalent époxy compris entre 150 et 300. Quant aux caractéristiques physiques de cette résine, elles vont de celles des résines liquides de faible viscosité (environ 2.10⁻³ Pa.s à 25°C) jusqu'à celles de résines pâteuses dont le point de fusion est de l'ordre de 60°C. On utilise tout préférentiellement dans l'invention les résines appartenant à la famille des éthers glycidiques de bis(hydroxyphényl) alcanes mentionés ci-avant lors de la définition détaillée de la résine (f2).

Il peut être avantageux dans certains cas de modifier les prépolymères selon la présente invention par emploi d'un réactif copolymérisable (d1), (d2) ou (d3).

Dans le composé précité servant de réactif (d2), les proportions des divers constituants du mélange des produits de formules (X), (XI) et éventuellement (XII) peuvent varier dans de larges limites. De manière générale, les proportions des constituants sont choisies entre les limites suivantes (exprimant le pourcentage pondéral de chacun des constituants dans le mélange) :
- au moins 30 %, et de préférence de 50 % à 80 % de N-(méth) allyloxyphénylmaléimide de formule (X),
- de 5 % à 50 % et de préférence de 10 % à 35 % de dérivé(s) mono-(méth)allyl substitué(s) de formule (XI),
- et de 0 % à 20 % et de préférence de 0 % à 15 % de dérivé(s) di-(méth)allyl substitué(s) de formule (XII),
   la somme des constituants devant dans chaque cas être égale à 100 % en poids ;

+ Quand on souhaite par exemple améliorer davantage les propriétés de flexion à chaud :
*(d3) un ou plusieurs hétérocycle(s) substitué(s) comportant une ou plusieurs double(s) liaison(s) carbone-carbone.

Il doit être bien entendu que l'on peut utiliser, comme réactif facultatif (d), des mélanges de réactifs (d1) + (d3) ou (d2) + (d3).

S'agissant du réactif facultatif (d1), il est choisi parmi :
- le N-(allyloxy-2 phényl)maléimide,
- le N-(allyloxy-3 phényl)maléimide,
- le N-(allyloxy-4 phényl)maléimide,
- le N-(méthallyloxy-2 phényl)maléimide,
- le N-(méthallyloxy-3 phényl)maléimide,
- le N-(méthallyloxy-4 phényl)maléimide et leurs mélanges.

Les maléimides de formule (X) sont des produits connus qui sont décrits dans la demande de brevet européen EP-A1-0 208 634.

S'agissant du réactif facultatif (d2), on utilise de préférence comme composé comprenant un mélange de N-(méth)allyloxyphénylmaléimide de formule (X) avec un ou plusieurs dérivés de substitution (méth)allylés de formule(s) (XI) et éventuellement (XII), le produit brut obtenu par mise en oeuvre du procédé décrit dans la demande de brevet européen EP-A-0 274 967.

La réactivité des constituants du milieu de réaction selon l'invention peut être accrue au besoin par addition d'un catalyseur (e) qui peut être soit (e1) un initiateur de polymérisation radicalaire tel que par exemple, le péroxyde de dicumyle, le péroxyde de lauroyle, l'azobisisobutyronitrile, soit (e2) un composé imidazole.

Ledit composé imidazole (e2) répond à la formule générale : 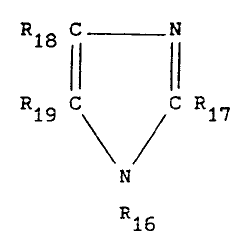
dans laquelle R₁₆, R₁₇, R₁₈ et R₁₉, identiques ou différents, représentent chacun : un atome d'hydrogène, un radical alkyle ou alcoxy ayant de 1 à 20 atomes de carbone, vinyle, phényle, nitro, R₁₈ pouvant former avec R₁₉ et les atomes de carbone auxquels sont liés ces radicaux un cycle unique comme par exemple un cycle benzéique, R₁₆ pouvant également représenter un groupement carbonyle lié à un deuxième cycle imidazole.

Comme exemples spécifiques de composés imidazole facultatif (e2), on peut citer en particulier : l'imidazole ou glyoxaline, le méthyl-1 imidazole, le vinyl-2 imidazole, le diméthyl-1,2 imidazole, le vinyl-1 imidazole, le vinyl-1 méthyl-2 imidazole, le benzimidazole, le carbonyldiimidazole.

Des prépolymères conformes à la présente invention qui sont spécialement intéressants sont ceux qui comprennent le produit de réaction entre :
- un ou plusieurs N,N'-bis-maléimide(s) conventionnel(s) (a) de formule (I),
- un N,N'-bis-maléimide siloxane (b) de formule (II),
- un ou plusieurs diamine(s) biprimaire(s) encombrée(s) (c2) et/ou (c3) de formule(s) (IV) et/ou (V),
- un ou plusieurs hétérocycle(s) substitué(s) (d3) comportant une ou plusieurs double(s) liaison(s) carbone-carbone,
- et un réactif acrylate (f1) ou une résine époxy(f2).

Des polymères qui sont plus spécialement intéressants sont ceux qui comprennent le produit de réaction entre les constituants qui non seulement sont rassemblés dans le paragraphe qui précède, mais encore qui sont choisis sous leurs diverses formes préférées expliquées plus avant dans le présent mémoire.

Dans les prépolymères thermodurcissables qui viennent d'être définis, on choisit les quantités de réactifs (a) et (c) de manière à avoir de préférence, en poids par rapport au poids total de ces constituants :
- de 70 à 90 % de bis-maléimide(s) (a) de formule (I),
- de 10 à 30 % de diamine(s) (c) de formules (III), (IV) et/ou (V).

S'agissant de la quantité de bis-maléimide siloxane (b) de formule (II), elle représente de préférence de 5 à 30 % du poids total des réactifs (a) + (c).

S'agissant de la quantité du réactif facultatif (d), elle représente de préférence de 5 à 50 % du poids total des réactifs (a) + (c).

S'agissant du catalyseur facultatif (e), selon sa nature et selon la vitesse de polymérisation souhaitée au stade de la mise en ouevre, on l'utilise de préférence à un taux se situant dans l'intervalle allant de 0,05 à 0,5 % en poids par rapport à l'ensemble des réactifs (a) + (b) + (c) + éventuellment (d).

S'agissant de l'additif obligatoire (f), formé d'un réactif acrylate (f1) ou d'une résine époxy (f2), on utilise en quantité représentant de préférence de 5 à 30 % du poids de l'ensemble des constituants (a) + (b) + (c) + (f) + éventuellement (d).

Divers adjuvants peuvent être incorporés dans les prépolymères selon l'invention. Ces adjuvants, habituellement utilisés et bien connus de l'homme de l'art, peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quartz pulvérisé, le mica ou des microbilles de verre. On peut aussi incorporer des adjuvants modifiant la structure physique du produit obtenu comme par exemple des agents porogènes ou des agents de renforcement fibreux tels que notamment des fibrilles de carbone, de polyimide, de polyamides aromatiques, des whiskers.

Le procédé de fabrication est tel que le prépolymère prêt à l'emploi présente suffisamment de souplesse et de collant en couche mince.

Selon un mode opératoire avantageux, on réalise tout d'abord un mélange intime du (ou des) bis-maléimide(s) (a) et du réactif aminé (c). Pour éviter une homopolymérisation prématurée des maléimides qui conduirait à une résine trop visqueuse, le mélange (a) + (c) est fondu, en absence du catalyseur (e) éventuel, en opérant sous agitation et à une température au plus égale à la température de fusion du maléimide le plus difficile à liquéfier et généralement comprise entre 50°C et 180°C , et de préférence entre 80°C et 170°C, jusqu'à l'obtention d'un milieu liquide homogène (étape 1).

Puis on ajoute successivement dans le mélange fondu qui est agité et maintenu à une température, identique ou différente de celle mise en oeuvre dans l'étape précédente, comprise également entre 50°C et 180°C et, de préférence, entre 80°C et 170°C : dans un premier temps le bis-maléimide siloxane (b), puis dans un deuxième temps l'additif (f) en veillant à conserver un milieu liquide homogène ; et, une fois cet additif introduit, on coule immédiatement le prépolymère formé à l'extérieur du réacteur ayant servi à la préparer (étape 2).

Dans le cas où l'on choisit de faire appel au réactif facultatif (d) et/ou au catalyseur facultatif (e), il(s) est (sont) généralement introduit(s) en début d'étape 2 (dans le mélange fondu qui, comme indiqué ci-avant, est agité et maintenu à une température, identique ou différente de celle mise en oeuvre dans l'étape 1, comprise entre 50°C et 180°C et, de préférence, entre 80°C et 170°C) avant de procéder à toute introduction des autres constituants (b) et (f) du mélange réactionnel. On aura soin dans ce cas de laisser le milieu réactionnel réagir sous agitation pendant une durée allant par exemple de 1 minute à 15 minutes avant de procéder à l'introduction des autres constituants (b) et (f).

La viscosité à l'état fondu des prépolymères ainsi obtenus peut être aisément ajustée à la valeur souhaitée, comprise entre 0,1 Pa.s et 50 Pa.s, en jouant notamment sur la nature et les proportions respectives des réactifs mis en oeuvre ainsi que sur la température et la durée des différentes étapes du procédé de fabrication dont on vient de parler.

Les opérations qui viennent d'être décrites peuvent être effectuées non seulement en masse fondue, mais encore en présence de quantités variables d'un liquide polaire tel que par exemple : crésol, diméthylformamide, N-méthylpyrrolidone, diméthylacétamide, méthyléthylcétone, dioxanne, cyclohexanone.

A l'état de liquide homogène, les prépolymères selon l'invention peuvent être utilisés directement par exemple pour l'imprégnation de conducteurs ou pour faire des moulages par simple coulée à chaud. On peut aussi, après refroidissement et broyage, employer ces prépolymères à l'état de poudres par exemple pour l'obtention d'objets moulés par compression, éventuellement en association avec des charges fibreuses ou pulvérulentes. Les prépolymères peuvent également être utilisés en solution pour la préparation de revêtements, de collages, de matériaux stratifiés dont le squelette peut être sous forme de nappes tissées ou non tissées, d'éléments unidirectionnels ou de fibres coupées naturelles ou synthétiques tels que par exemple les filaments ou fibres de verre, de bore, de carbone, de tungstène, de silicium, de polyamide-imide ou de polyamide aromatique.

Les prépolymères selon la présente invention présentent un intérêt tout particulier pour l'obtention d'articles intermédiaires préimprégnés sans solvant. L'imprégnation du matériau fibreux peut être effectuée par application des techniques usuelles telles que l'immersion, l'enduction au racle ou au rideau ou l'imprégnation par transfert. Le film transférable et les articles préimprégnés peuvent être utilisés directement ou bien être emmagasinés en vue d'un emploi ultérieur ; ils conservent remarquablement leurs propriétés au cours d'un stockage au froid entre 0 et 10°C. Les prépolymères utilisés pour cette application présentent de préférence une viscosité à l'état fondu comprise entre 2 Pa.s et 50 Pa.s.

Les matériaux préimprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de préimprégnés sur une forme ou un support.

On effectue ensuite la réticulation dans les conditions technologiques habituelles relatives aux matériaux composites et en particulier à des températures comprises entre 100 et 300°C.

On peut utiliser aussi les préimprégnés comme renforts ou moyens de réparation de pièces détériorées.

Mais il est aussi possible de concevoir des pièces selon la technique de l'enroulement filamentaire avec ou sans support, destinée à la réalisation de pièces de révolution, technique utilisée notamment pour faire des pièces relevant des industries automobile et aéronautique. Les prépolymères mis en oeuvre dans cette technique présentent de préférence une viscosité à l'état fondu comprise entre 0,1 Pa.s et 2 Pa.s.

Les exemples qui suivent illustrent de manière non limitative comment la présente invention peut être mise en pratique.

Dans ces exemples, un certain nombre de contrôles sont effectués. De même, diverses propriétés sont mesurées. On indique ci-après les modes opératoires et/ou les normes selon lesquelles ces contrôles et mesures sont effectués.

### - VISCOSITE A L'ETAT FONDU DU PREPOLYMERE :

La viscosité à l'état fondu dont on parle dans le présent mémoire est la viscosité dynamique du prépolymère obtenu au moment de la coulée en fin du procédé de préparation conduit en masse ; elle est mesurée à 80°C +/- 0,1°C avec un viscosimètre RHEOMAT 30 de la Société CONTRAVES équipé d'un mobile tournant sous un gradient de 13 s⁻¹ ; sa valeur est donnée en Pa.s.

### - POINT DE RAMOLLISSEMENT DU PREPOLYMERE :

On appelle point de ramollissement, la température approximative à laquelle une baguette de verre de 6 mm de diamètre peut s'enfoncer facilement de quelques mm dans le prépolymère.

### - TEMPERATURE DE TRANSITION VITREUSE DU POLYMERE DURCI :

La température de transition vitreuse (Tg) correspond à la chute brutale du module d'élasticité en fonction de la température. Elle peut être déterminée sur le graphique représentant les variations du module d'élasticité en fonction de la température, variations mesurées par analyse mécanique dynamique, à l'aide d'un appareil DMA DUPONT modèle 982, à une vitesse de montée en température de 3°C/min. Les éprouvettes sont conditionnées à EHO (Etat Hygrométrique Zéro) c'est-à-dire qu'elles sont placées en dessicateur sur silicagel et séchées 24 heures à température ambiante sous 0,66 - 1,33.10² Pa avant de réaliser les mesures.

### - CARACTERISTIQUES MECANIQUES EN FLEXION DU POLYMERE DURCI :

La détermination du module en flexion (Mf) et de la résistance à la rupture (Rf) est faite sur des éprouvettes de type barreau conditionnées à EHO, selon la norme ASTM D 790 M. Les résultats sont donnés en MPa.

### - CARACTERISTIQUES MECANIQUES EN TRACTION DU POLYMERE DURCI :

Elles sont déterminées sur des éprouvettes de type haltère, conditionnées à EHO, selon la norme ASTM D 638 M.

### - RESISTANCE AU CHOC CHARPY DU POLYMERE DURCI :

Elle est déterminée à 20°C sur des éprouvettes de type barreau de 80 x 10 x 4 mm ne comportant pas d'entaille, conditionnées à EHO, selon la norme ASTM D 256. Les résultats sont donnés en kJ/m².

### EXEMPLE 1 :

1. Exemple de mise en oeuvre de la présente invention.
   Dans un réacteur en verre muni d'un agitateur de type ancre, on introduit à température ambiante :
   - 80 g (0,223 mole) de N,N'-4,4'-diphénylméthane-bis-maléimide, et
   - 20 g (0,064 mole) de diamino-4,4' tétraéthyl-3,3',5,5' diphénylméthane.

   Etape 1 : on plonge le réacteur dans un bain d'huile préchauffée à 160°C et le mélange est agité jusqu'à fusion complète des ingrédients engagés et obtention d'une masse liquide homogène. La durée de cette étape est de 5 minutes.
   Etape 2 : le mélange fondu obtenu est refroidi jusqu'à 120°C et on introduit 8 g de N-vinylpyrrolidone-2, puis on laisse réagir l'ensemble sous agitation pendant 8 minutes.
   On ajoute ensuite dans la masse réactionnelle sous agitation et à 120°C, 20 g (0,0159 mole) du bis-maléimide à groupement diorganopolysiloxane qui est décrit dans le paragraphe 2 ci-après.
   On ajoute ensuite dans la masse réactionnelle, toujours sous agitation et maintenue à 120°C, 16 g de diacrylate de bisphénol A di(di-oxyéthylé), ce composé étant disponible dans le commerce sous la marque déposée EBECRYL 150 de la Société UCB, et on coule immédiatement la masse réactionnelle, à l'état de masse liquide homogène, dans un moule préchauffé à 150°C.
   Le prépolymère ainsi obtenu est souple et collant à température ambiante (20°C). Il présente un point de ramollissement voisin de 5°C. Sa viscosité à 80°C est de 3 Pa.s
   Avec ce prépolymère, l'imprégnation de type HOT-MELT (avec prépolymère fondu sans solvant) de matériaux fibreux, à base par exemple de nappes tissées de fibres de carbone, pour faire des articles intermédiaires préimprégnés, est possible dans la gamme de température allant de 80 à 100°C.
   En coulant immédiatement le prépolymère dans un moule comme indiqué ci-avant, on peut préparer des plaques de dimensions 140 x 100 x 4 mm qui vont subir le cycle de cuisson suivant :
   . 60 minutes à 140°C,
   . 100 minutes entre 140°C et 250°C,
   . 16 heures à 250°C,
   . et 2 heures entre 250°C et 25°C.

   Après démoulage, les plaques à base de polymère durci sont découpées pour obtenir des éprouvettes de dimensions appropriées sur lesquelles on mesure : la température de transition vitreuse (Tg), le module en flexion (Mf), la résistance à la rupture en flexion (Rf), la résistance au choc CHARPY non entaillée (Rc), l'allongement à la rupture en traction (At).
   Les valeurs trouvées sont les suivantes :
   - Tg : 295°C,
   - Mf :
      . à 20°C : 3300 MPa,
      . à 250°C : 1500 MPa,
   - Rf :
      . à 20°C : 130 MPa,
      . à 250°C : 60 MPa,
   - Rc : . à 20°C : 17 Kj/m²,
   - At : . à 20°C : 2,7 %.

   A titre d'essai comparatif, on a reproduit les opérations décrites ci-avant, mais en n'utilisant pas de réactif acrylate. Le prépolymère obtenu dans ces conditions présente un point de ramollissement de 50°C et une viscosité à 80°C qui est de l'ordre de 100 Pa.s, ce qui rend son utilisation difficile pour réaliser des articles intermédiaires préimprégnés sans solvant (le prépolymère est trop visqueux et l'imprégnation des fibres entraîne une déformation importante de la nappe qui constitue un obstacle au développement de cette application).
2. Description du procédé de préparation du bis-maléimide à groupement diorganopolysiloxane utilisé dans l'exemple 1 :
   Ce bis-maléimide présente la formule suivante : 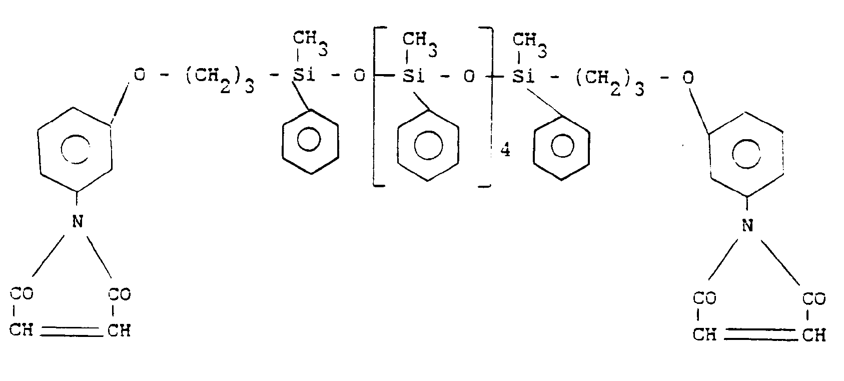
   2.1 Préparation de la diamine à groupement diorganopolysiloxane de laquelle dérive ce bis-maléimide :
      Dans un réacteur en verre muni d'une agitation centrale, d'une ampoule de coulée et d'un réfrigérant ascendant dans lequel on établit une légère surpression d'azote sec, on charge 369 g (0,46 mole) d'un alpha, oméga-bis(hydrogéno)diorganopolysiloxane de formule : 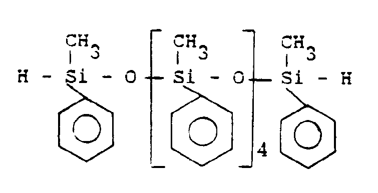 ayant une masse réactionnelle de l'ordre de 802 g.
      On introduit ensuite le réacteur dans un bain d'huile préchauffé à 55°C, puis on additionne le catalyseur. Ce dernier est le catalyseur de Karsted (complexe à base de platine élémentaire et de ligands divinyl-1,3 tétraméthyl-1,1,3,3 disiloxane) : il est en solution dans le toluène (concentration de 3,5 % en poids) et on introduit avec une seringue 1,49 cm³ de cette solution de catalyseur ; le rapport (poids de platine élémentaire engagé/poids de la masse réactionnelle) est égale à 91.10⁻⁶.
      Dans le réacteur, on coule ensuite progressivement 137 g (0,92 mole) de métaallyloxyaniline, pendant une durée de 60 minutes, de façon à contrôler l'exothermicité de la réaction. Trente minutes après la fin de la coulée on revient à température ambiante. Le produit obtenu d'un poids de 506 g, est une huile visqueuse limpide, de couleur brun-orangé, présentant un spectre de RMN du proton en accord avec la structure : 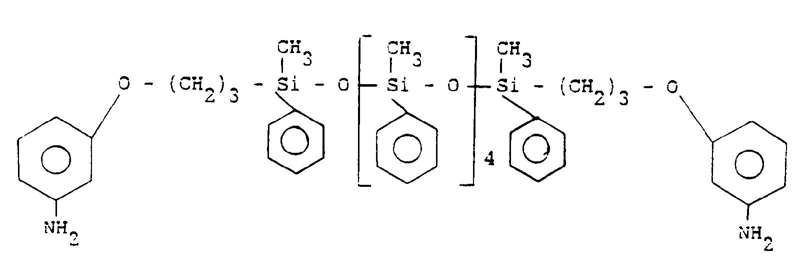 La masse moléculaire est de l'ordre de 1100 g. Dans ces conditions, le taux de transformation des réactifs engagés est de 100 % (par RMN et analyse infra-rouge, on ne détecte ni d'amine, ni d'oligomère siloxane hydrogéné)et le rendement en poids en diamine souhaitée est de 100 %.
   2.2 Préparation du bis-maléimide diorganopolysiloxane :
      Dans un réacteur en verre muni d'une agitation centrale, et d'un réfrigérant ascendant dans lequel on établit une légère surpression d'azote sec et qui est placé dans un bain d'huile préchauffé à 55°C, on introduit simultanément, en 10 minutes, à l'aide de 2 ampoules de coulée :
      - 20 cm³ d'une solution dans l'acétone de 28 g (0,025 mole et 0,02 fonction NH₂) de la diamine siloxane préparée au paragraphe 2.1,
      - 15 cm³ d'une solution dans l'acétone de 6,4 g (0,055 mole) d'anhydride maléique.

      Lorsque les coulées sont terminées, chaque ampoule est rincée par 5 cm³ d'acétone, qui sont ensuite rajoutés à la masse réactionnelle maintenue sous agitation pendant encore 15 minutes.
      Dans l'ampoule de coulée ayant contenu l'anhydride maléique, on charge 6,1 g (0,06 mole) d'anhydride acétique et, dans l'autre ampoule, on charge 1,67 g (0,0165 mole) de triéthylamine.
      Ces deux composés sont alors coulés dans le réacteur, puis on ajoute 0,3 cm³ d'une solution aqueuse contenant 0,0528 mole d'acétate de nickek pour 100 cm³ de solution.
      Le mélange réactionnel est maintenu à reflux sous agitation pendant 2 heures 30 minutes. La température est ensuite abaissée à 20°C.
      Le mélange réactionnel est dilué avec 80 cm³ d'eau glacée (5°C) sous forte agitation et on extrait ensuite avec 80 cm³ d'acétate d'éthyle le produit huileux présent. La phase organique obtenue est lavée avec trois fois 80 cm³ d'eau pour arriver à pH6 dans les eaux de lavage, puis séchée pendant 2 heures sur sulfate de sodium anhydre. Après filtration, on élimine par évaporation l'acétate d'éthyle de la phase organique en terminant cette opération sous pression réduite (70 Pa environ) à 60°C et on recueille 30,3 g (soit un rendement en poids de 96 % par rapport à la théorie) d'un produit visqueux, brun-orangé, dont le spectre RMN est en accord avec la structure du bis-maléimide souhaité qui a été définie au début de cet exemple. La masse moléculaire est de l'ordre de 1260 g.

### EXEMPLE 2 :

Dans un réacteur en verre muni d'un agitateur de type ancre, on introduit à température ambiante :
- 82 g (0,229 mole) de N,N'-4,4' diphénylméthane-bis-maléimide,
- et 18 g (0,064 mole) de diamino-4,4' diéthyl-3,3' diméthyl-5,5' diphénylméthane.

Etape 1 : on plonge le réacteur dans un bain d'huile préchauffée à 160°C et le mélange est agité jusqu'à fusion complète des ingrédients engagés et obtention d'une masse liquide homogène. La durée de cette étape est de 5 minutes.

Etape 2 : le mélange fondu obtenu est refroidi jusqu'à 120°C et on introduit 8 g de N-vinylpyrrolidone-2, puis on laisse réagir l'ensemble sous agitation pendant 8 minutes.

On ajoute ensuite dans la masse réactionnelle sous agitation et à 120°C, 20 g (0,0159 mole) du bis-maléimide à groupement diorganopolysiloxane qui a été décrit dans l'exemple 1.

On ajoute ensuite dans la masse réactionnelle, toujours sous agitation et maintenue à 120°C, 15 g d'une résine époxy consistant dans un éther glycidique obtenu en faisant réagir avec de l'épichlorhydrine du bis(hydroxy-4 phényl)-2,2 propane (ou bisphénol A) et ayant un poids d'équivalent époxy de 188 ; sa viscosité à 25°C est de 10,5 Pa.s ; elle est disponible dans le commerce sous la marque déposée ARALDITE de la Société CBA, type LY 556.

Une fois la résine époxy introduite, on coule immédiatement la masse réactionnelle liquide obtenue dans un moule préchauffé à 150°C.

Le prépolymère ainsi obtenu est souple et collant à température ambiante (20°C). Il présente un point de ramollissement voisin de 10°C. Sa viscosité à 80°C est de 4 Pa.s.

Avec ce prépolymère, l'imprégnation de type HOT-MELT (avec prépolymère fondu sans solvant) de matériaux fibreux, à base par exemple de nappes tissées de fibres de carbone, pour faire des articles intermédiaires préimprégnés, est possible dans la gamme de température allant de 80 à 100°C.

En coulant immédiatement le prépolymère dans un moule comme indiqué ci-avant, on peut préparer des plaques de dimensions 140 x 100 x 4 mm qui vont subir le cycle de cuisson suivant :
. 60 minutes à 140°C,
. 100 minutes entre 140°C et 250°C,
. 16 heures à 250°C,
. et 2 heures entre 250°C et 25°C.

Après démoulage, les plaques à base de polymère durci sont découpées pour obtenir des éprouvettes de dimensions appropriées sur lesquelles on mesure : la température de transition vitreuse (Tg), le module en flexion (Mf), la résistance à la rupture en flexion (Rf), la résistance au choc CHARPY non entaillée (Rc), l'allongement à la rupture en traction (At).

Les valeurs trouvées sont les suivantes :
- Tg : 290°C,
- Mf :
   . à 20°C : 3400 MPa,
   . à 250°C : 1500 MPa,
- Rf :
   . à 20°C : 130 MPa,
   . à 250°C : 60 MPa,
- Rc : . à 20°C : 15 Kj/m²,
- At : . à 20°C : 2,6 %.

A titre d'essai comparatif, on a reproduit les opérations décrites ci-avant, mais en n'utilisant pas de résine époxy. Le prépolymère obtenu dans ces conditions présente un point de ramollissement de 50°C et une viscosité à 80°C qui est de l'ordre de 100 Pa.s, ce qui rend son utilisation difficile pour réaliser des articles intermédiaires préimprégnés sans solvant (le prépolymère est trop visqueux et l'imprégnation des fibres entraîne une déformation importante de la nappe qui constitue un obstacle au développement de cette application).

## Revendications

1. Prépolymères thermodurcissables à groupements imide, présentant une viscosité à l'état fondu comprise entre 0,1 Pa.s et 50 Pa.s et mesurée à 80°C avec un viscosimètre RHEOMAT 30 de la Société CONTRAVES équipé d'un mobile tournant sous un gradiant de 13 s⁻¹, qui comprennent le produit de réaction en milieu liquide homogène, a une température allant de 50°C à 180°C, entre:
- (a) un N,N'-bis-maléimide ou une association de plusieurs bis-maléimides de formule: 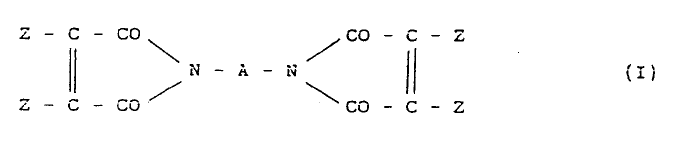 dans laquelle :
. les symboles Z, identiques ou différents, représentent chacun H, CH₃, ou Cl ;
. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule : 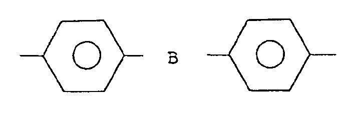 dans laquelle B représente un lien valentiel simple ou un groupement :
- CH₂ - ; 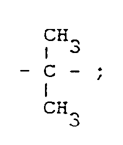 - O - ; 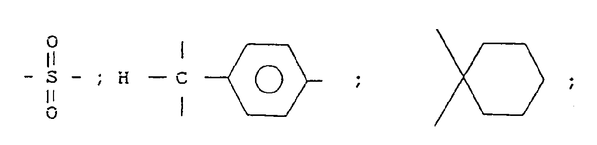 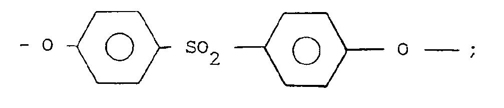
- (b) un N,N' -bis-maléimide renfermant dans sa structure un groupement diorganopolysiloxane ;
- (c) une ou plusieurs diamine(s) biprimaire(s) aromatique(s) ;
- éventuellement (d) un ou plusieurs monomère(s) qui consistent les espèces suivantes:
* (d1) soit un ou plusieurs monomère(s) de formule : 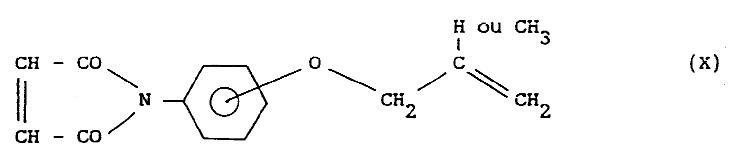 dans laquelle le radical allyloxy ou méthallyloxy est en position ortho, métha ou para par rapport à l'atome de carbone du cycle benzénique relié à l'azote ;
* (d2) soit un composé comprenant :
- un mélange d'un monomère de formule : 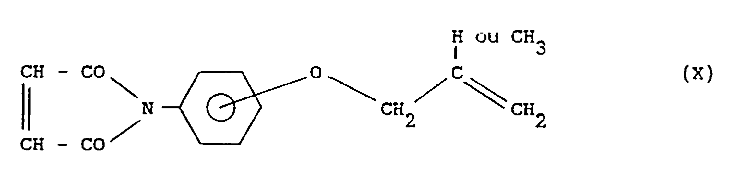 dans laquelle le radical allyloxy ou méthallyloxy est en position ortho, méta ou para par rapport à l'atome de carbone du cycle benzénique relié à l'azote.
- avec :
- au moins un dérivé monosubstitué de formule : 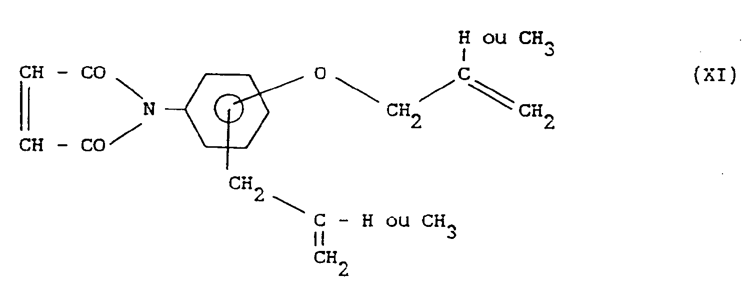
- et éventuellement un ou plusieurs dérivé(s) disubstitué(s) de formule : 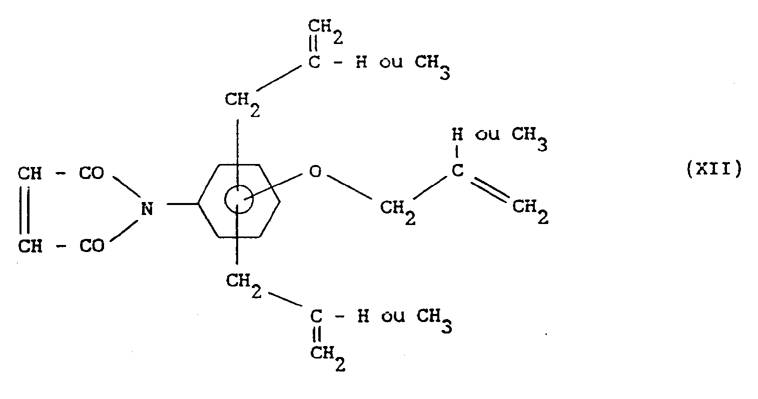
* (d3) soit un ou plusieurs hétérocycle(s) substitué(s) qui sont choisis parmi: les vinylpyridines, la N-vinylpyrrolidone, l'isocyanurate d'allyle, le triallylisocyanurate, le vinyltétrahydrofuranne, et leurs mélange,
- éventuellement encore (e) un catalyseur ;
lesdits prépolymères à groupements imide étant caractérisés par les points suivants :
. Point 1 : on utilise comme réactif (b) un N,N'-bis-maléimide à groupement diorganopolysiloxane répondant à la formule générale : 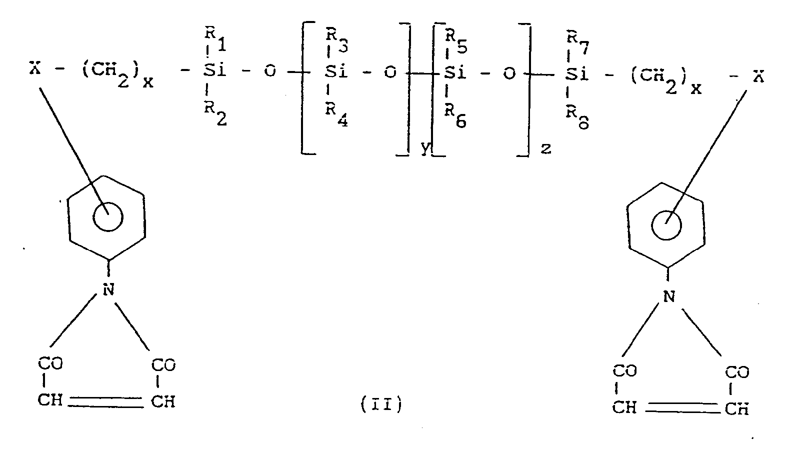 dans laquelle :
- X, qui est est position ortho, méta ou para par rapport à l'atome de carbone du cycle benzénique relié à l'azote, représente un lien valentiel simple ou un atome ou un groupement suivant :
- O - ; - S - ; 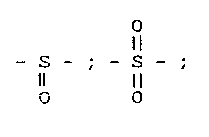
- R₁, R₂, R₃, R₄, R₅, R₆, R₇, R₈, identiques ou différents, représentent chacun un radical hydrocarboné monovalent choisi parmi : les radicaux alkyles, linéaires ou ramifiés ayant de 1 à 12 atomes de carbone, ces radicaux pouvant être substitués par un ou plusieurs atomes de chlore, de brome ou de fluor ou par un groupement -CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8,
- les symboles y et z représentent des nombres, identiques ou différents, entiers ou fractionnaires, dont la somme se situe dans l'intervalle allant de 0 à 100 ;
. Point 2 : on utilise comme réactif (c) une ou plusieurs diamine(s) biprimaire(s) prise(s) dans le groupe formé par :
* (c1) les espèces répondant à la formule générale :
H₂N - D - NH₂ (III)
dans laquelle le symbole D représente l'un des radicaux divalents que représente le symbole A de la formule (I), les symboles A et D contenus dans un même polymère pouvant être identiques ou différents entre eux ;
* (c2) les espèces répondant à la formule générale : 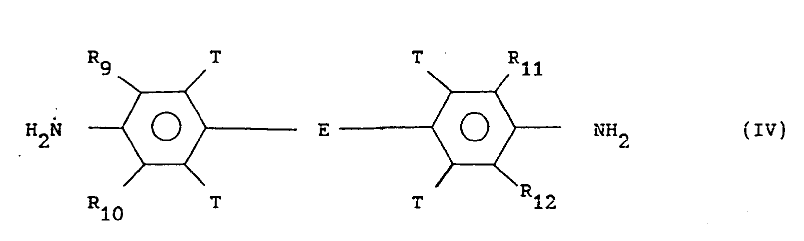 dans laquelle :
. les symboles R₉, R₁₀, R₁₁ et R₁₂, identiques ou différents, représentent chacun un radical méthyle, éthyle, propyle ou isopropyle ;
. les symboles T, identiques ou différents, représentent chacun un atome d'hydrogène ou un atome de chlore ;
. le symbole E représente un radical divalent choisi dans le groupe formé par les radicaux :
-CH₂- ; 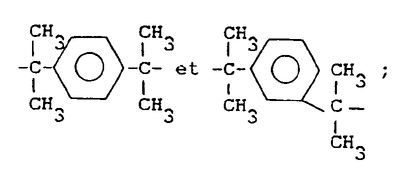
* et (C3) les espèces répondant à la formule générale : 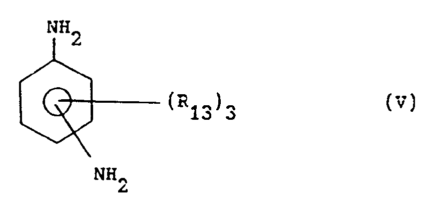 dans laquelle :
. les radicaux amino sont en position méta ou para, l'un par rapport à l'autre ;
. les symboles R₁₃ identiques ou différents, représentent chacun un radical méthyle, éthyle, propyle ou isopropyle ;
. Point 3 : le milieu de réaction qui sert à préparer les prépolymères selon la présente invention contient en outre un additif obligatoire (f) consistant soit dans un réactif acrylate (f1), soit dans une résine époxy non halogénée (f2) :
- ledit réactif acrylate (f1) consistant lui-même dans un ou plusieurs composé(s) de formule générale : 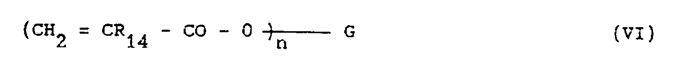 dans laquelle :
. le symbole R₁₄ représente un atome d'hydrogène ou un radical méthyle ;
. n représente un nombre entier ou fractionnaire au moins égal à 1 et au plus égal à 8 ;
. le symbole G représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libres ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa structure un ou plusieurs pont(s) oxygène et/ou une ou plusieurs fonction(s) hydroxyle(s) libre(s), le (ou les) valence(s) libre(s) du radical G aromatique pouvant être portée(s) par un atome de carbone d'une chaîne aliphatique et/ou par un atome de carbone d'un noyau benzénique ;
- ladite résine époxy non halogéné (f2) consistant elle-même dans une résine époxy qui possède un poids d'aquivalent époxy compris entre 100 et 500 et qui consiste dans un éther glycidique obtenu en faisant réagir avec de l'épichlorhydrine un polyphénol divalent choisi dans le groupe formé par : la famille des bis(hydroxyphényl)alcanes comme le bis (hydroxy-4 phényl)-2,2 propane, le bis(hydroxy-4 phényl) méthane, le bis(hydroxy-4 phényl) méthyl-phényl-méthane, les bis(hydroxy-4 phényl) tolyl-méthanes ; le résorcinol ; l'hydroquinone ; le pyrocatéchol ; le dihydroxy-4,4' diphényle ; et les produits de condensation des phénols précités avec un aldéhyde, et où les prépolymères son caractérisés en ce que:
. d'une part: on choisit les quantités de réactifs (a) et (c) de manière à avoir, en poids par rapport au poids total de ces constituants:
- de 50 à 98 % de bis-maléimide(s) (a) de formule (I),
- de 2 à 50 % de diamine(s) (c) de formules (III), (IV) et/ou (V),
. et d'autre part: s'agissant de la quantité de bis-maléimide siloxane (b) de formule (II), elle représente de 5 à 40 % du poids total des réactifs (a) + (c),
. la quantité du réactif facultatif (d), quand on en utilise un, représente moins de 60 % du poids total des réactifs (a) + (c),
. le catalyseur facultatif (e), quand on en utilise un, est employé à un taux se situant dans l'intervalle allant de 0,01 à 1 % en poids par rapport à l'ensemble des réactifs (a) + (b) + (c) + éventuellemnt (d) et
. l'additif obligatoire (f) est utilisé en quantité représentant de 1 à 60 % du poids de l'ensemble des constituants (a) + (b) + (c) + (f) + éventuellement (d).

2. Prépolymères selon la revendication 1 caractérisés, en ce que le réactif (a) est pris dans le groupe formé par :
- le N,N'-métaphénylène-bis-maléimide,
- le N,N'-paraphénylène-bis maléimide,
- le N,N'-4,4'-diphénylméthane-bis-maléimide,
- le N,N'-4,4'-diphényléther-bis-maléimide,
- le N,N'-4,4'-diphènylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,
- et leurs mélanges.

3. Prépolymères selon l'une quelconque des revendications 1 et 2, caractérisés en ce que le réactif (b) est pris dans le groupe formé par les bis-maléimides siloxane de formule (II) dans laquelle :
1) X = - O - ; R₁ = R₂ = R₃ = R₄ = R₅ = R₆ = R₇ = R₈ = radical alkyle linéaire ayant de 1 à 3 atomes de carbone ; x = 2, 3 ou 4 ; y + z se situe dans l'intervalle allant de 0 à 100 et, de préférence, de 4 à 70.
2) X = - O - ; R₁ = R₂ = R₃ = R₄ = R₇ = R₈ = radical alkyle linéaire ayant de 1 à 3 atomes de carbone ; R₅ = R₆ radical phényle ; x = 2, 3 ou 4; y + z se situe dans l'intervalle allant de 0 à 100 et, de préférence, de 4 à 70.
3) X = - O - ; R₁ = R₂ = R₇ = R₈ = radical alkyle linéaire ayant de 1 à 3 atomes de carbone ; R₃ = R₄ = R₅ = R₆ = radical phényle ; x = 2, 3 ou 4 ; y + z se situe dans l'intervalle allant de 0 à 100 et, de préférence, de 4 à 70.
4) X = - O - ; R₁ = R₂ = R₃ = R₅ = R₇ = R₈ = radical alkyle linéaire ayant de 1 à 3 atomes de carbone ; R₄ = R₆ = radical phényle **;** x = 2, 3 ou 4 ; y + z se situe dans l'intervalle allant de 0 à 100 et, de préférence, de 4 à 70.
5) X = - O - ; R₁ = R₃ = R₅ = R₇ = radical alkyle linéaire ayant de 1 à 3 atomes de carbone ; R₂ = R₄ = R₆ = R₈ = radical phényle ; x = 2, 3 ou 4 ; y + z se situe dans l'intervalle allant de 0 à 100 et, de préférence, de 4 à 70.

4. Prépolymères selon l'une quelconque des revendications 1 à 3, caractérisés en ce que le réactif aminé (c) est pris dans le groupe formé par :
* les espèces (c1) suivantes :
- la paraphénylène diamine,
- la métaphénylène diamine,
- le diamino-4,4' diphénylméthane,
- le bis(amino-4 phényl)-2,2 propane,
- la benzidine,
- l'oxyde de bis-(amino-4 phényl),
- la diamine-4,4' diphénylsulfone,
- et leurs mélanges ;
* ou les espèces (c2) et (c3) suivantes :
- le diamino-4,4' tétraméthyl-3,3', 5,5' diphénylméthane,
- le diamino-4,4' tétraéthyl-3,3', 5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis(amino-4 diméthyl-3,5 α,α diméthylbenzyl)-1,4 benzène,
- le bis(amino-4 diméthyl-3,5 α,α diméthylbenzyl)-1,3 benzène,
- le diamino-1,3 diéthyl-2,4 méthyl-6 benzène,
- le diamino-1,3 méthyl-2 diéthyl-4,6 benzène,
- et leurs mélanges.

5. Prépolymères selon l'une quelconque des revendication 1 à 4, caractérisés en ce que le réactif acrylate (f1) consiste dans un ou plusieurs composé(s) appartenant aux types (f1.1), (f1.2), (f1.3), f1.4) et (F1.5) suivants :
* (f1.1) les mono(méth)acrylates correspondant à la formule (VI) dans laquelle :
. n = 1, et
. G représente un radical organique monovalent de formule : 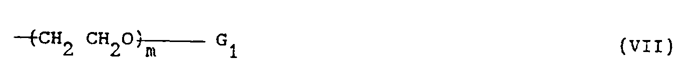
dans laquelle : G₁ représente un radical alkyle, linéaire ou ramifié, ayant de 1 à 6 atomes de carbone ou un radical phényle ; et m est un nombre entier égal à zéro, 1, 2, 3, 4 ou 5 ;
* (f1.2) les di(méth)acrylates correspondant à la formule (VI) dans laquelle :
. n = 2, et
. G représente un radical organique divalent de formule : 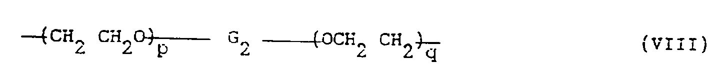
dans laquelle : G₂ représente un radical divalent alkylène, linéaire ou ramifié, ayant de 2 à 9 atomes de carbone et pouvant renfermer un ou plusieurs pont(s) oxygène ou un radical de formule 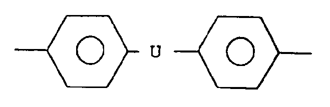 dans laquelle le symbole U représente un lien valentiel simple ou un groupement :
-CH₂-, -CH₂-CH₂-, -CH(CH₃)CH₂-, 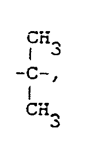 -O-, 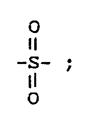 les symboles p et q, identiques ou différents, représentent chacun un nombre entier égal à zéro, 1, 2, 3, 4 ou 5 ;
* (f1.3) les tri- et tétra(méth)acrylates correspondant à la formule (VI) dans laquelle :
. n = 3 ou 4, et
. G représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;
* (f1.4) les (méth)acrylates d'époxy novolaques qui, tout en correspondant à la formule (VI), sont représentés ici par la formule suivante : 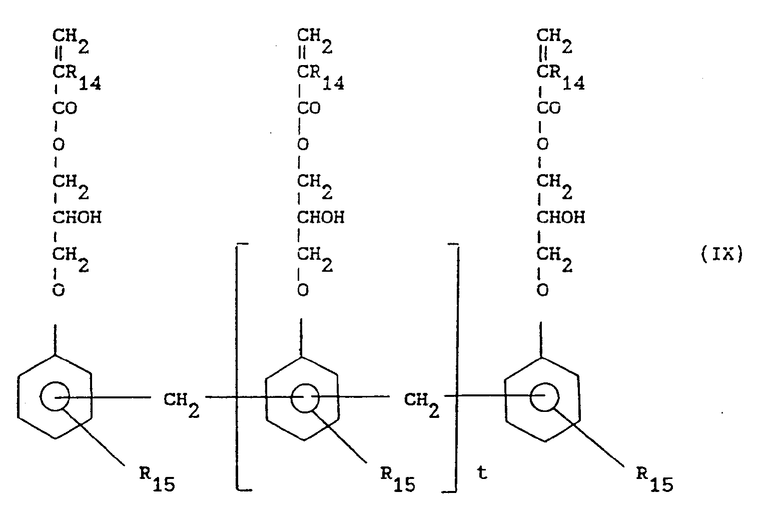 dans laquelle :
. le symbole R₁₄ a la signification donnée ci-avant à propos de la formule (VI) ;
. le symbole R₁₅ représente un atome d'hydrogène ou un radical méthyle ;
. t est un nombre entier ou fractionnaire se situant dans l'intervalle allant de 0,1 à 7 ;
* (f1.5) des mélanges de plusieurs acrylates et/ou méthacrylates d'un même type (f1.1), (f1.2), (f1.3) ou (f1.4) entre eux ou des mélanges d'un ou plusieurs acrylate(s) et/ou méthacrylate(s) d'un même type avec un ou plusieurs acrylate(s) et/ou méthacrylate(s) d'un autre type.

6. Prépolymères selon l'une quelconque des revendications 1 à 5, caractérisés en ce que le catalyseur (e), quand on en utilise un, est soit (e1) un initiateur de polymérisation radicalaire, soit (e2) un composé imidazole.

7. Prépolymères selon l'une quelconque des revendications 1 à 6, caractérisés en ce que:
d'une part: on choisit les quantités de réactifs (a) et (c) de manière à avoir, en poids par rapport au poids total de ces constituants:
- de 70 à 90 % de bis-maléimide(s) (a) de formule (I),
- de 10 à 30 % de diamine(s) (c) de formules (III), (IV) et/ou (V);
et d'autre part: s'agissant de la quantité de bis-maléimide siloxane (b) de formule (II), elle représente de 5 à 30 % du poids total des réactifs (a) + (c).

8. Prépolymères selon l'une quelconque des revendications 1 à 7,caractérisés en ce que la quantité du réactif facultatif (d), quand on en utilise un, représente de 5 à 50 % du poids total des réactifs (a) + (c).

9. Prépolymères selon l'une quelconque des revendications 1 à 8, caractérisés en ce que le catalyseur facultatif (e), quand on en utilise un, est employé à un taux se situant dans l'intervalle allant de 0,05 à 0,5 % en poids par rapport à l'ensemble des réactifs (a) + (b) + (c) + éventuellement (d).

10. Prépolymères selon l'une quelconque des revendications 1 à 9, caractérisés en ce que l'additif obligatoire (f) est utilisé en quantité représentant de 5 à 30 % du poids de l'ensemble des constituants (a) + (b) + (c) + (f) + éventuellement (d).

11. Procédé de préparation des prépolymères selon l'une quelconque des revendications 1 à 10, caractérisé en ce que l'on enchaîne les étapes suivantes :
. étape 1 : on fait fondre le mélange (a) + (c) en opérant sous agitation et à une température comprise entre 50°C et 180°C jusqu'à l'obtention d'un milieu liquide homogène ;
. puis, étape 2, on ajoute successivement dans le mélange fondu qui est agité et maintenu à une température, identique ou différente de celle mise en oeuvre dans l'étape précédente, comprise également entre 50°C et 180°C : dans un premier temps le bis-maléimide siloxane (b), puis dans un deuxième temps l'additif (f) en veillant à conserver un milieu liquide homogène ; et, une fois cet additif introduit, on coule immédiatement le prépolymère formé à l'extérieur du réacteur ayant servi à la préparer ;
. en veillant encore à ce que, dans le cas où l'on choisi de faire appel au réactif facultatif (d) et/ou au catalyseur facultatif (e), d'une part ce (ou ces) constituant(s) soit(ou soient) introduit(s) en début d'étape 2 avant de procéder à toute introduction des autres constituants (b) et (f) et d'autre part le milieu réactionnel soit mis à réagir sous agitation pendant une durée allant de 1 minute à 15 minutes avant de procéder à l'introduction des autres constituants (b) et (f).

12. Application des prépolymères selon l'une quelconque des revendications 1 à 10 à la fabrication de pièces selon la technique de l'enroulement filamentaire et à la réalisation d'articles intermédiaires préimprégnés en utilisant la technique de l'imprégnation sans solvant de matériaux fibreux divers.

## Patentansprüche

1. Wärmehärtbare Präpolymere mit Imidgruppen, die eine Schmelzviskosität zwischen 0,1 Pa.s und 50 Pa.s, gemessen bei 80 °C mit einem Viskosimeter RHEOMAT 30 der Firma CONTRAVES, ausgestattet mit einem Mobile, das sich unter einem Gradienten von 13 s⁻¹ dreht, aufweisen, welche das Produkt der Reaktion in homogenem, flüssigem Milieu bei einer Temperatur von 50 °C bis 180 °C umfassen, zwischen:
(a) einem N,N'-Bis-maleimid oder einer Assoziation von mehreren Bis-maleimiden der Formel: 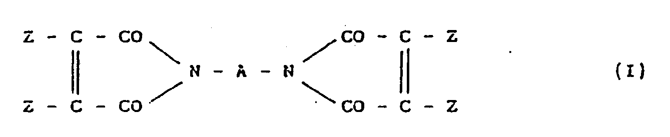 worin:
- die Symbole Z, die identisch oder verschieden sind, jeweils H, CH₃ oder Cl bedeuten;
- das Symbol A einen zweiwertigen Rest bedeutet, ausgewählt aus der Gruppe bestehend aus den Resten: Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen und den Resten der Formel: 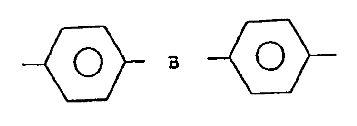 worin B eine einfache Valenz-Bindung bedeutet oder eine Gruppe:
- CH₂ - ; 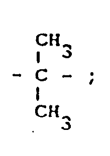 - O - ; 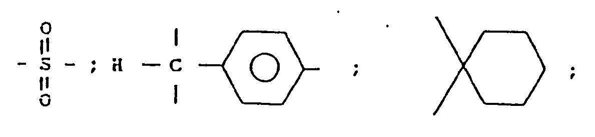 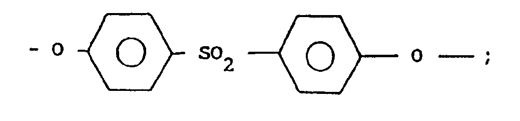
(b) einem N,N'-Bis-maleimid, das in seiner Struktur eine Diorganopolysiloxangruppe einschließt;
(c) einem oder mehreren aromatischen biprimären Diamin(en);
gegebenenfalls
(d) einem oder mehreren Monomeren welches aus den folgenden Arten besteht/bestehen:
* (d1) entweder einem oder mehreren Monomeren der Formel: 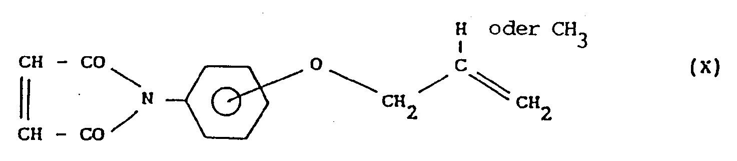 worin der Allyloxy- oder Methallyloxyrest in ortho-, meta- oder para-Stellung ist in bezug auf das Kohlenstoffatom des Benzolringes, das mit dem Stickstoff verbunden ist;
* (d2) oder einer Verbindung umfassend:
- ein Gemisch eines Monomeren der Formel: 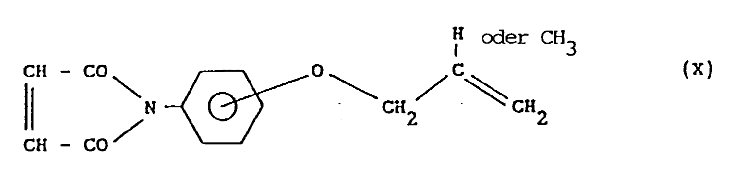 worin der Allyloxy- oder Methallyloxyrest in ortho-, meta- oder para-Stellung ist in bezug auf das Kohlenstoffatom des Benzolringes, das mit dem Stickstoff verbunden ist,
- mit:
-- mindestens einem monosubstituierten Derivat der Formel: 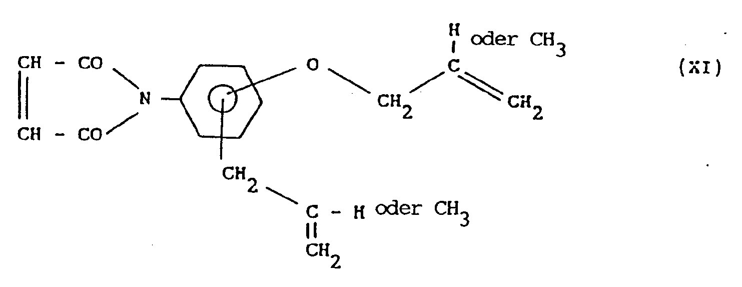
-- und gegebenenfalls einem oder mehreren disubstituierten Derivat(en) der Formel 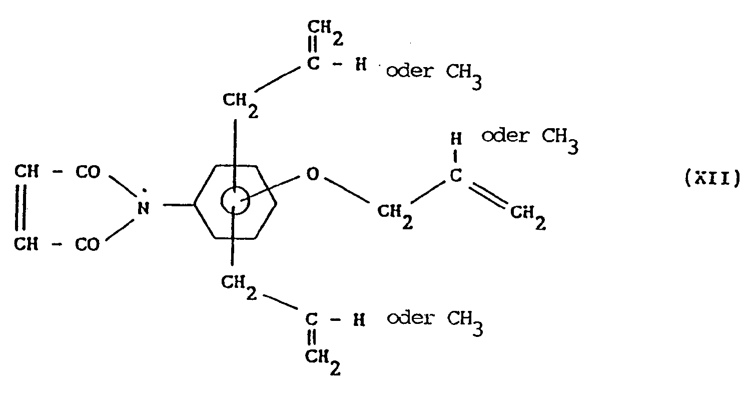
* (d3) oder einem oder mehreren substituierten Heterozyklus/Heterozyklen, ausgewählt unter: Vinylpyridinen, N-Vinylpyrrolidon, Allylisocyasnurat, Triallylisocyanurat, Vinyltetrahydrofuran, und deren Mischung,
gegegenenfalls noch
(e) einem Katalysator;
wobei diese Präpolymeren mit Imidgruppen durch die folgenden Punkte charakterisiert sind:
Punkt 1:
Man verwendet als Reaktand (b) ein N,N'-Bis-maleimid mit Diorganopolysiloxangruppe entsprechend der allgemeinen Formel 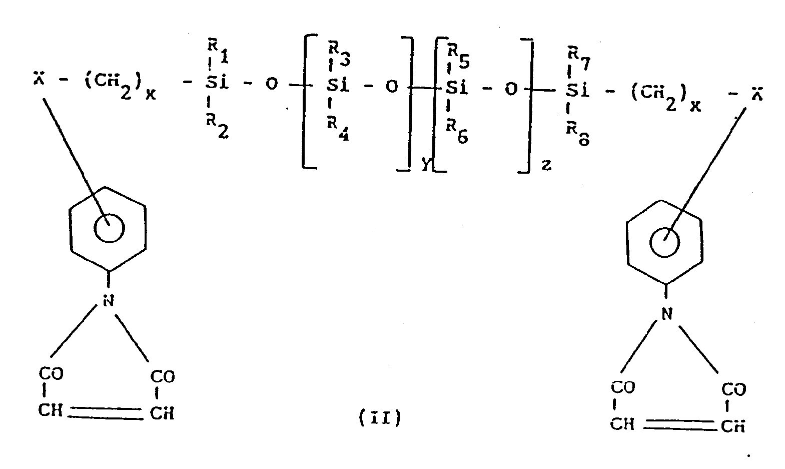 worin:
- X, welches in ortho-, meta- oder para-Stellung ist in bezug auf das Kohlenstoffatom des Benzolringes, das mit dem Stickstoff verbunden ist, bedeutet eine einfache Valenzbindung oder ein Atom oder eine folgende Gruppe:
- O - ; - S - ; 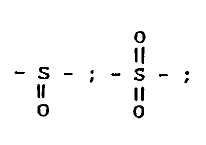
- R₁ , R₂, R₃, R₄, R₅, R₆, R₇, R₈, die identisch oder verschieden sind, bedeuten jeweils einen einwertigen Kohlenwasserstoffrest, ausgewählt aus: den linearen oder verzweigten Alkylresten mit 1 bis 12 Kohlenstoffatomen, wobei diese Reste durch ein oder mehrere Chlor-, Brom- oder Fluoratome oder durch eine Gruppe -CN substituiert sein können; einem Phenylrest, der gegebenenfalls durch ein oder mehrere Alkyl- und/oder Alkoxygruppen mit 1 bis 4 Kohlenstoffatomen oder durch ein oder mehrere Chloratome substituiert ist;
- das Symbol x ist eine ganze Zahl in dem Bereich von 2 bis 8;
- die Symbole y und z bedeuten identische oder verschiedene ganze oder Bruchzahlen, deren Summe in dem Bereich von 0 bis 100 liegt;
Punkt 2:
Man verwendet als Reaktand (c) ein oder mehrere biprimäre(s) Diamin(e) genommen aus der Gruppe gebildet durch:
* (c1) die Arten entsprechend der allgemeinen Formel
H₂N - D - NH₂ (III)
worin das Symbol D einen der zweiwertigen Reste bedeutet, welche das Symbol A der Formel (I) darstellen, wobei die Symbole A und D, die in dem gleichen Polymeren enthalten sind, identisch oder untereinander verschieden sein können;
* (c2) die Arten entsprechend der allgemeinen Formel 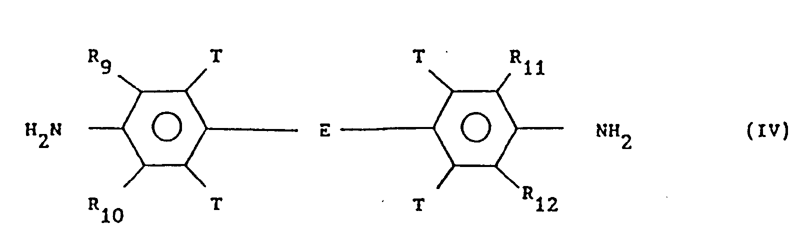 worin:
- die Symbole R₉, R₁₀, R₁₁ und R₁₂, die identisch oder verschieden sind, jeweils einen Methyl-, Ethyl-, Propyl- oder Isopropylrest bedeuten;
- die Symbole T, die identisch oder verschieden sind, jeweils ein Wasserstoffatom oder ein Chloratom bedeuten;
- das Symbol E bedeutet einen zweiwertigen Rest ausgewählt aus der Gruppe gebildet durch die Reste:
-CH₂- ; 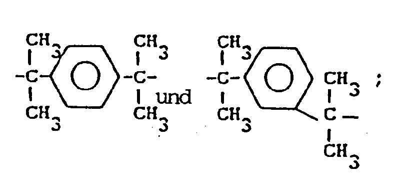
* und (c3) die Arten entsprechend der allgemeinen Formel 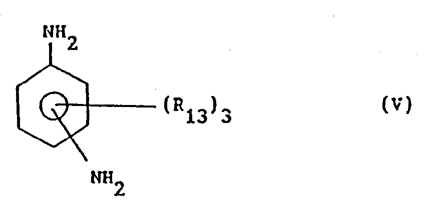 worin:
- die Aminoreste in bezug untereinander in meta- oder para-Stellung sind;
- die Symbole R₁₃, die identisch oder verschieden sind, bedeuten jeweils einen Methyl-, Ethyl-, Propyl- oder Isopropylrest;
Punkt 3:
Das Reaktionsmilieu, welches zur Herstellung der Präpolymeren gemäß der vorliegenden Erfindung dient, enthält außerdem einen obligatorischen Zusatz (f), bestehend entweder aus einem Acrylatreagens (f1) oder aus einem nicht-halogenierten Epoxyharz (f2):
- wobei dieses Acrylatreagens (f1) seinerseits in einer oder mehreren Verbindung(en) der allgemeinen Formel 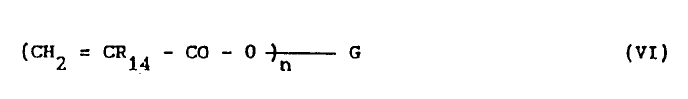 besteht, worin:
- das Symbol R₁₄ ein Wasserstoffatom oder einen Methylrest darstellt;
- n eine ganze oder Bruchzahl mindestens gleich 1 und höchstens gleich 8 bedeutet;
- das Symbol G bedeutet einen organischen Rest der Wertigkeit n, abgeleitet:von einem linearen oder verzweigten gesättigten aliphatischen Rest mit 1 bis 30 Kohlenstoffatomen, der eine oder mehrere Sauerstoffbrücke(n) und/oder eine oder mehrere freie Hydroxylfunktion(en) enthalten kann; von einem aromatischen Rest (vom Aryl- oder arylaliphatischen Typ) mit 6 bis 150 Kohlenstoffatomen, bestehend aus einem Benzolring, der durch 1 bis 3 Alkylreste mit 1 bis 5 Kohlenstoffatomen substituiert sein kann, oder aus mehreren Benzolringen, die gegebenenfalls wie vorstehend angegeben substituiert sind, verbunden untereinander durch eine einfache Valenzbindung, eine inerte Gruppe oder ein Alkylenrest mit 1 bis 3 Kohlenstoffatomen, wobei dieser aromatische Rest an verschiedenen Stellen seiner Struktur eine oder mehrere Sauerstoffbrücke(n) und/oder eine oder mehrere freie Hydroxylfunktion(en) einschließen kann, wobei die freie(n) Valenz(en) des aromatischen Restes G von einem Kohlenstoffatom einer aliphatischen Kette und/oder von einem Kohlenstoffatom eines Benzolringes getragen sein kann/können;
- das genannte nicht-halogenierte Epoxyharz (f2) besteht seinerseits aus einem Epoxyharz, das ein Epoxyäquivalent gewicht zwischen 100 und 500 besitzt und das aus einem Glycidether besteht, der erhalten wurde, indem mit Epichlorhyrin ein zweiwertiges Polyphenol umgesetzt wird, ausgewählt aus der Gruppe gebildet durch:die Familie der Bis-(hydroxyphenyl)-alkane wie das Bis-2,2-(4-hyroxyphenyl)-propan, das Bis-(4-hydroxyphenyl)-methan, das Bis-(4-hydroxyphenyl)-methylphenylmethan, die Bis-(4-hydroxyphenyl)-tolylmethane, Resorcin, Hydrochinon, Brenzkatechin, 4,4,-Dihydroxydiphenyl, und die Kondensationsprodukte der vorerwähnten Phenole mit einem Aldehyd, und wo die Präpolymeren charakterisiert sind,daß:
- einerseits: man wählt die Mengen der Reaktanden (a) und (c) derart, daß man in Gewicht in bezug auf das Gesamtgewicht dieser Bestandteile hat:
-- von 50 bis 98 % Bis-maleimid(e) (a) der Formel (I),
-- von 2 bis 50 % Diamin(e) (c) der Formeln (III), (IV) und/oder (V),
- und andererseits: wenn es sich um die Menge des Bis-maleimidsiloxans (b) der Formel (II) handelt, stellt sie 5 bis 40 % des Gesamtgewichts der Reaktanten (a) + (c) dar,
- die Menge des fakultativen Reaktanden (d) stellt, wenn man ihn verwendet, weniger als 60 % des Gesamtgewichts der Reaktanten (a) + (c) dar,
- der fakultative Katalysator (e) wird, falls man ihn verwendet, bei einem Wert angewandt, der in dem Bereich von 0,01 bis 1 Gew.-% in bezug auf die Gesamtheit der Reaktanten (a) + (b) + (c) + gegebenenfalls (d) liegt, und
- der obligatorische Zusatz (f) wird in einer Menge von 1 bis 60 % des Gewichts der Gesamtheit der Bestandteile (a) + (b) + (c) + (f) + gegebenenfalls (d) verwendet.

2. Präpolymere gemäß Anspruch 1, dadurch gekennzeichnet, daß der Reaktand (a) ausgewählt ist aus der Gruppe gebildet durch:
- N,N'-meta-Phenylen-bis-maleimid
- N,N'-para-Phenylen-bis-maleimid
- N,N'-4,4'-Diphenylmethan-bis-maleimid
- N,N'-4,4'-Diphenylether-bis-maleimid
- N,N'-4,4'-Diphenylsulfon-bis-maleimid
- N,N'-1,4-Cyclohexylen-bis-maleimid
- N,N'-4,4'-1,1-diphenylcyclohexan-bis-maleimid
- N,N'-4,4'-2,2-diphenylpropan-bis-maleimid
- N,N'-4,4'-Triphenylmethan-bis-maleimid
- N,N'-2-Methyl-1,3-phenylen-bis-maleimid
- N,N'-4-Methyl-1,3-phenylen-bis-maleimid
- N,N'-5-Methyl-1,3-phenylen-bis-maleimid
und deren Gemische.

3. Präpolymere gemäß einem der Ansprüche 1 und 2, dadurch gekennzeichnet, daß das Reagens (b) genommen ist aus der Gruppe, die durch die Siloxan-bis-maleimide der Formel (II) gebildet ist, worin:
1) X = - O -; R₁ = R₂ = R₃ = R₄ = R₅ = R₆ = R₇ = R₈ = gerader Alkylrest mit 1 bis 3 Kohlenstoffatomen; x = 2, 3 oder 4; y + z liegt in dem Bereich von 0 bis 100 und vorzugsweise von 4 bis 70;
2) X = - O -; R₁ = R₂ = R₃ = R₄ = R₇ = R₈ = gerader Alkylrest mit 1 bis 3 Kohlenstoffatomen, R₅ = R₆ Phenylrest; x = 2, 3 oder 4; y + z liegt in dem Bereich von 0 bis 100 und vorzugsweise von 4 bis 70;
3) X = - O -; R₁ = R₂ = R₇ = R₈ = gerader Alkylrest mit 1 bis 3 Kohlenstoffatomen; R₃ = R₄ = R₅ = R₆ = Phenylrest; x = 2, 3 oder 4; y + z liegt in dem Bereich von 0 bis 100 und vorzugsweise von 4 bis 70;
4) X = - O -; R₁ = R₂ = R₃ = R₅ = R₇ = R₈ = gerader Alkylrest mit 1 bis 3 Kohlenstoffatomen; R₄ = R₆ = Phenylrest; x = 2, 3 oder 4; y + z liegt in dem Bereich von 0 bis 100 und vorzugsweise von 4 bis 70;
5) X = - O -; R₁ = R₃ = R₅ = R₇ = gerader Alkylrest mit 1 bis 3 Kohlenstoffatomen; R₂ = R₄ = R₆ = R₈ = Phenylrest; x = 2, 3 oder 4; y + z liegt in dem Bereich von 0 bis 100 und vorzugsweise von 4 bis 70.

4. Präpolymere gemäß einem der Ansprüche 1 bis 3, dadurch gekennzeichnet, daß das Aminreagens (c) genommen ist aus der Gruppe gebildet durch:
* die folgenden Arten (c1):
- para-Phenylendiamin,
- meta-Phenylendiamin,
- 4,4'-Diamino-diphenylmethan,
- 2,2-Bis-(4-aminophenyl)-propan,
- Benzidin,
- Bis-(4-aminophenyl)-oxid,
- 4,4'-Diamino-diphenylsulfon,
und deren Gemische;
* oder die folgenden Arten (c2) und (c3):M
- 4,4'-Diamino-3,3',5,5'-tetramethyl-diphenylmethan,
- 4,4'-Diamino-3,3',5,5'-tetraethyl-diphenylmethan,
- 4,4'-Diamino-3,5-dimethyl-3',5'-diethyl-diphenylmethan,
- 4,4'-Diamino-3,3'-diethyl-5,5'-dimethyl-diphenylmethan,
- 4,4'-Diamino-3,3',5,5'-tetraisopropyl-diphenylmethan,
- 4,4'-Diamino-3,3'-diisopropyl-5,5'-dimethyl-diphenylmethan,
- 1,4-Bis-(4-amino-3,5-dimethyl-α,α-dimethylbenzyl)-benzol,
- 1,3-Bis-(4-amino-3,5-dimethyl-α,α-dimethylbenzyl)-benzol,
- 1,3-Diamino-2,4-diethyl-6-methylbenzol,
- 1,3-Diamino-2-methyl-4,6-diethylbenzol.
und deren Gemische.

5. Präpolymere gemäß einem der Ansprüche 1 bis 4, dadurch gekennzeichnet, daß das Acrylatreagens (f1) aus einer oder mehreren Verbindung(en) besteht, gehörend zu den folgenden Typen (f1.1), (f1.2), (f1.3), (f1.4) und (f1.5):
* (f1.1) Die Mono(meth)acrylate entsprechend der Formel (VI), worin:
- n = 1, und
- G einen einwertigen organischen Rest der Formel 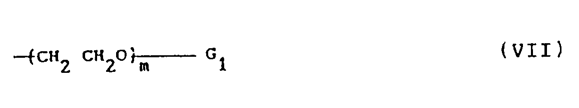
darstellt, worin: G₁ einen linearen oder verzweigten Alkylrest mit 1 bis 6 Kohlenstoffatomen oder einen Phenylrest bedeutet; und m eine ganze Zahl gleich 0, 1, 2, 3, 4 oder 5 ist;
* (f1.2) Die Di(meth)acrylate entsprechend der Formel (VI), worin:
- n = 2, und
- G einen zweiwertigen organischen Rest der Formel 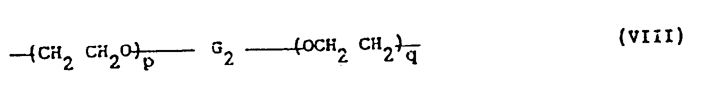
darstellt, worin: G₂ einen linearen oder verzweigten, zweiwertigen Alkylenrest mit 2 bis 9 Kohlenstoffatomen bedeutet, der eine oder mehrere Sauerstoffbrücke(n) oder einen Rest der Formel 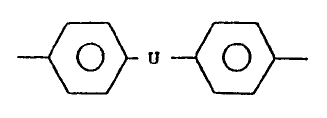 einschließen kann, worin das Symbol U eine einfache Valenzbindung oder eine Gruppe
-CH₂-, CH₂-CH₂-, -CH(CH₃)CH₂, 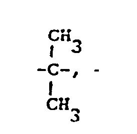 -O-, 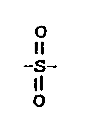 bedeutet; die Symbole p und q, die identisch oder verschieden sind, bedeuten jeweils eine ganze Zahl gleich 0, 1, 2, 3, 4 oder 5;
* (f.1.3) die Tri- und Tetra(meth)acrylate entsprechend der Formel (VI), worin:
- n = 3 oder 4, und
- G einen dreiwertigen oder vierwertigen organischen Rest bedeutet, abgeleitet von einem linearen oder verzweigten, gesättigten aliphatischen Rest mit 3 bis 20 Kohlenstoffatomen, der eine oder mehrere Sauerstoffbrücke(n) und/oder eine oder mehrere freie Hydroxylfunktion(en) enthalten kann;
* (f1.4) die Epoxy-Novolak(meth)acrylate, die der Formel (VI) entsprechen, und hier durch die folgende Formel (IX) 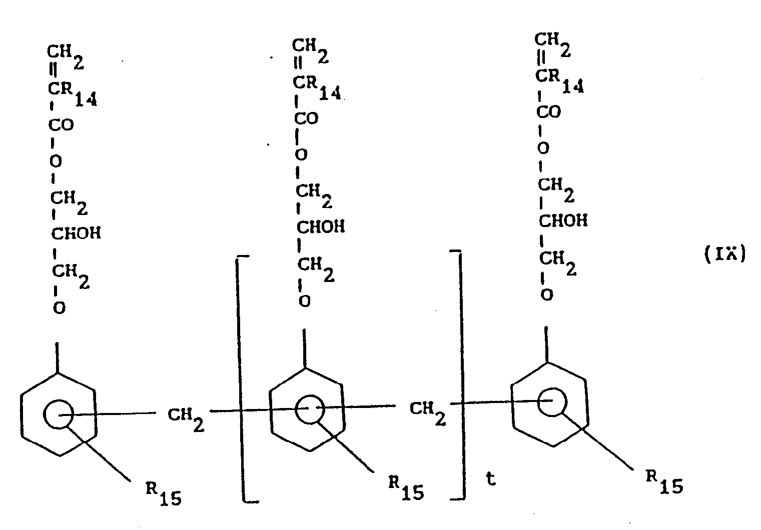 wiedergegeben sind, worin:
- das Symbol R₁₄ die vorstehend für Formel (VI) angegebene Bedeutung hat;
- das Symbol R₁₅ ein Wasserstoffatom oder einen Methylrest bedeutet;
- t ist eine ganze oder Bruchzahl in dem Bereich von 0,1 bis 7;
* f(1.5) Mischungen mehrerer Acrylate und/oder Methacrylate vom selben Typ (f1.1), (f1.2), (f1.3) oder (f1.4) untereinander oder Mischungen eines oder mehrerer Acrylate(s) und/oder Methacrylate(s) vom gleichen Typ mit einem oder mehreren Acrylat(en) und/oder Methacrylat(en) eines anderen Typs.

6. Präpolymere gemäß einem der Ansprüche 1 bis 5, dadurch gekennzeichnet, daß der Katalysator (e), falls ein solcher verwendet wird, entweder (e1) ein radikalischer Polymerisationsinitiator oder (e2) eine Imidazolverbindung ist.

7. Präpolymere gemäß einem der Ansprüche 1 bis 6, dadurch gekennzeichnet, daß:
einerseits: man die Mengen der Reaktanten (a) und (c) derart wählt, daß man in Gewicht bezogen auf das Gesamtgewicht dieser Bestandteile hat:
- von 70 bis 90 % Bis-maleimid(e) (a) der Formel (I)
- von 10 bis 30 % Diamin(e) (c) der Formeln (III), (IV) und/oder (V), und
andererseits: wenn es sich um die Menge des Siloxan-bis-maleimids (b) der Formel (II) handelt, stellt es von 5 bis 30 % des Gesamtgewichts der Reaktanten (a) + (c) dar.

8. Präpolymere gemäß einem der Ansprüche 1 bis 7, dadurch gekennzeichnet, daß die Menge des fakultativen Reagens (d), falls man ein solches verwendet, von 5 bis 50 % des Gesamtgewichts der Reaktanten (a) + (c) darstellt.

9. Präpolymere gemäß einem der Ansprüche 1 bis 8, dadurch gekennzeichnet, daß der fakultative Katalysator (e), wenn man einen solchen verwendet, in einer Menge angewandt wird, die in dem Bereich von 0,05 bis 0,5 Gew% in bezug auf die Gesamtheit der Reagentien (a) + (b) + (c) und gegebenenfalls (d) liegt.

10. Präpolymere gemäß einem der Ansprüche 1 bis 9, dadurch gekennzeichnet, daß der obligatorische Zusatz (f) in einer Menge verwendet wird, die 5 bis 30 % des Gewichts der Gesamtheit der Bestandteile (a) + (b) + (c) + (f) + gegebenenfalls (d) darstellt.

11. Verfahren zur Herstellung der Präpolymeren gemäß einem der Ansprüche 1 bis 10, dadurch gekennzeichnet, daß man die folgenden Stufen aneinanderreiht:
Stufe 1: man schmilzt das Gemisch (a) + (c),wobei unter Rühren und bei einer Temperatur zwischen 50 °C und 180 °C gearbeitet wird, bis zur Erzielung eines homogenen flüssigen Milieus; dann
Stufe 2: man gibt nacheinander in das geschmolzene Gemisch, das gerührt und bei einer Temperatur gehalten wird, die identisch oder verschieden von derjenigen ist, die in der vorhergehenden Stufe eingesetzt wurde, und auch zwischen 50 °C und 180 °C liegt: zunächst das Bis-maleimid-siloxan (b) zu, dann in einem zweiten Zeitraum den Zusatz (f), wobei darauf geachtet wird, daß ein homogenes flüssiges Milieu beibehalten wird; und dann wenn dieser Zusatz eingeführt ist, gießt man sofort das gebildete Präpolymere aus dem Reaktionsgefäß, das zu seiner Herstellung gedient hat;
und noch weiter darauf geachtet wird, daß im Falle der Verwendung eines fakultativen Reagens (d) und/oder eines fakultativen Katalysators (e) einerseits dieser/diese Bestandteil(e) zu Beginn der Stufe 2 eingeführt wird/werden, bevor man zur Einführung der anderen Bestandteile (b) und (f) schreitet und andererseits das Reaktionsmilieu unter Rühren während einer Zeitdauer von 1 Minute bis 15 Minuten reagieren gelassen wird, bevor die Einführung der anderen Bestandteile (b) und (f) erfolgt.

12. Verwendung der Präpolymeren gemäß einem der Ansprüche 1 bis 10 zur Erzeugung von Werkstücken gemäß der Fadenaufwickeltechnik und zur Herstellung von vorimprägnierten Zwischenerzeugnissen, wobei die Technik der Imprägnierung ohne Lösungsmittel von verschiedenen fasrigen Materialien angewandt wird.

## Claims

1. Heat-curable prepolymers containing imide groups, exhibiting a viscosity in the molten state of between 0.1 Pa s and 50 Pa s, measured at 80°C with a Contraves Rheomat 30 viscometer equipped with a rotor rotating at a rate of 13 s⁻¹, which comprise the product of reaction, in a homogeneous liquid medium at a temperature ranging from 50°C to 180°C, between:
- (a) an N,N'-bismaleimide or a combination of a number of bismaleimides of formula: 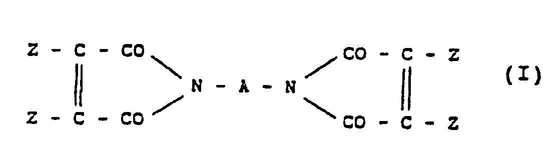 in which:
each of the symbols Z, which are identical or different, denotes H, CH₃ or Cl;
the symbol A denotes a divalent radical chosen from the group consisting of the radicals: cyclohexylenes, phenylenes, 4-methyl-1,3-phenylene, 2-methyl-1,3-phenylene, 5-methyl-1,3-phenylene and 2,5-diethyl-3-methyl-1,4-phenylene, and the radicals of formula: 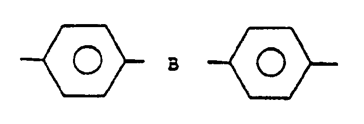 in which B denotes a single valency bond or a group:
- CH₂ - ; 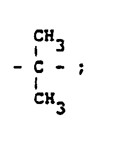 - O - ; 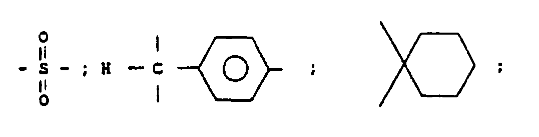 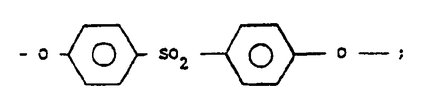
- (b) an N,N'-bismaleimide containing a diorganopolysiloxane group in its structure;
- (c) one or more aromatic diprimary diamines(s);
- optionally (d) one or more monomer(s)
which consist of the following species:
(d1) either one or more monomer(s) of formula: 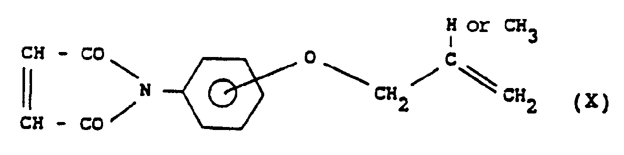 in which the allyloxy or methallyloxy radical is in an ortho, meta or para position in relation to the carbon atom of the benzene ring which is bonded to nitrogen;
(d2) or a compound comprising:
- a mixture of a monomer of formula: 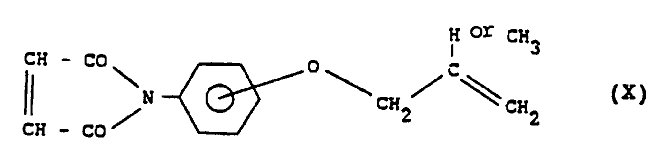 in which the allyloxy or methallyloxy radical is in an ortho, meta or para position in relation to the carbon atom of the benzene ring which is bonded to nitrogen;
- with:
- at least one monosubstituted derivative of formula: 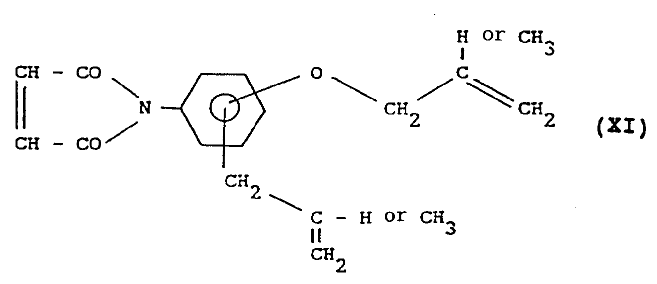
- and optionally one or more disubstituted derivative(s) of formula: 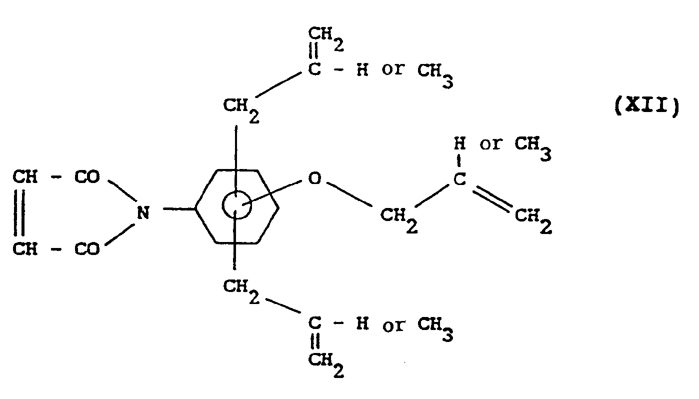
(d3) or one or more substituted heterocyclic ring(s) chosen from vinylpyridines, N-vinylpyrrolidone, allyl isocyanurate, triallyl isocyanurate, vinyltetrahydroturan, and mixtures thereof,
- also optionally (e) a catalyst;
the said prepolymers containing imide groups being characterized by the following points:
Point 1: as reactant (b) there is employed an N,N'-bismaleimide containing a diorganopolysiloxane group corresponding to the general formula: 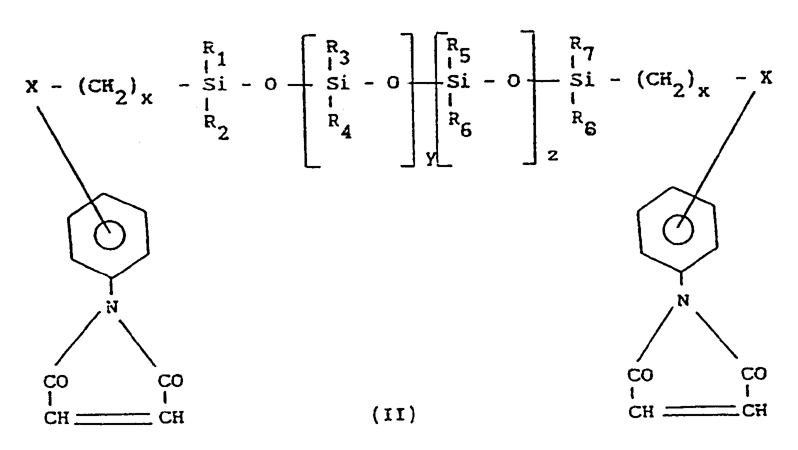 in which:
- X, which is in an ortho, meta or para position in relation to the carbon atom of the benzene ring which is bonded to nitrogen, denotes a single valency bond or an atom or a group as follows:
- O - ; - S - ; 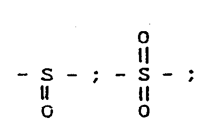
- each of R₁, R₂, R₃, R₄, R₅, R₆, R₇ and R₈, which are identical or different, denotes a monovalent hydrocarbon radical chosen from: linear or branched alkyl radicals containing from 1 to 12 carbon atoms, it being possible for these radicals to be substituted by one or more chlorine, bromine or fluorine atoms or by a -CN group; a phenyl radical optionally substituted by one or more alkyl and/or alkoxy radicals containing 1 to 4 carbon atoms or by one or more chlorine atoms;
- the symbol x is an integer situated in the range from 2 to 8;
- the symbols y and z denote identical or different, whole or fractional numbers whose sum is situated in the range from 0 to 100;
Point 2: as reactant (c) there are employed one or more diprimary diamine(s) taken from the group made up of:
(c1) the species corresponding to the general formula:
H₂N - D - NH₂ (III)
in which the symbol D denotes one of the divalent radicals denoted by the symbol A of the formula (I), it being possible for the symbols A and D contained in the same single polymer to be identical or different from each other;
(c2) the species corresponding to the general formula: 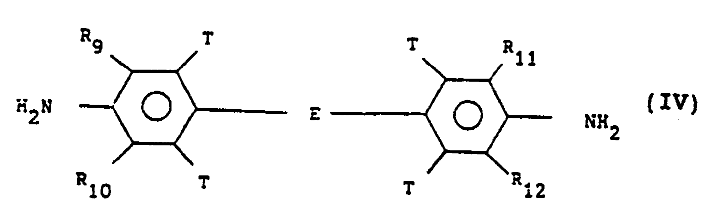 in which:
each of the symbols R₉, R₁₀, R₁₁ and R₁₂, which are identical or different, denotes a methyl, ethyl, propyl or isopropyl radical;
each of the symbols T, which are identical or different, denotes a hydrogen atom or a chlorine atom;
the symbol E denotes a divalent radical chosen from the group made up of the radicals:
-CH₂- ; 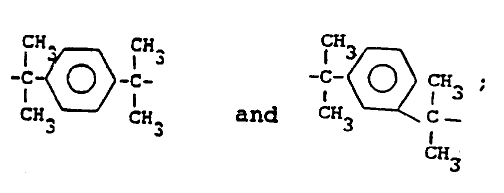
and (c3) the species corresponding to the general formula: 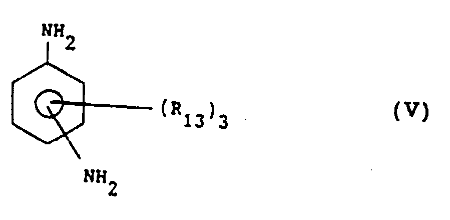 in which:
the amino radicals are in a meta or para position relative to each other;
each of the symbols R₁₃, which are identical or different, denotes a methyl, ethyl, propyl or isopropyl radical;
Point 3: the reaction mixture which is used to prepare the prepolymers according to the present invention additionally contains an obligatory additive (f) consisting either of an acrylate reactant (f1) or of an unhalogenated epoxy resin (f2):
- the said acrylate reactant (f1) itself consisting of one or more compounds(s) of general formula: 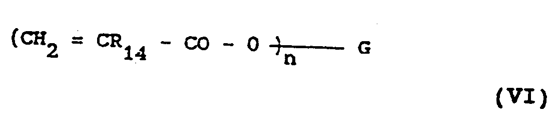 in which:
the symbol R₁₄ denotes a hydrogen atom or a methyl radical;
n denotes a whole or fractional number equal to at least 1 and not greater than 8;
the symbol G denotes an organic radical of valency n derived: from a linear or branched, saturated aliphatic residue containing from 1 to 30 carbon atoms and capable of containing one or more oxygen bridge(s) and/or one or more free hydroxyl functional group(s); or from an aromatic residue (of aryl or arylaliphatic type) containing from 6 to 150 carbon atoms, consisting of a benzene nucleus which may be substituted by one to three alkyl radicals containing from 1 to 5 carbon atoms or of a number of benzene nuclei optionally substituted as indicated above, joined together by a single valency bond, an inert group or an alkylene radical containing from 1 to 3 carbon atoms, it being possible for the said aromatic residue to contain, in various places in its structure, one or more oxygen bridge(s) and/or one or more free hydroxyl functional group(s), it being possible for the free valency (valencies) of the aromatic radical G to be carried by a carbon atom of an aliphatic chain and/or by a carbon atom of a benzene nucleus;
- the said unhalogenated epoxy resin (f2) itself consisting of an epoxy resin which has an epoxy equivalent weight of between 100 and 500 and which consists of a glycidyl ether obtained by reacting epichlorohydrin with a divalent polyphenol chosen from the group made up of: the group of bis(hydroxyphenyl)alkanes like 2,2-bis(4-hydroxyphenyl)propane, bis(4-hydroxyphenyl)methane, bis(4-hydroxyphenyl)methylphenylmethane or bis(4-hydroxyphenyl)tolylmethanes; resorcinol, hydroquinone, pyrocatechol, 4,4'-dihydroxydiphenyl, and the products of condensation of the abovementioned phenols with an aldehyde, and where the prepolymers are characterized in that:
on the one hand: the quantities of reactants (a) and (c) are chosen so as to have, by weight relative to the total weight of these constituents:
- from 50 to 98 % of bismaleimide(s) (a) of formula (I),
- from 2 to 50 % of diamine(s) (c) of formulae (III), (IV) and/or (V);
and, on the other hand: with regard to the quantity of siloxane bismaleimide (b) of formula (II), this represents from 5 to 40 % of the total weight of the reactants (a) + (c),
the quantity of the optional reactant (d), when one is used, represents less than 60 % of the total weight of the reactants (a) + (c),
the optional catalyst (e) when one is used, is employed in a proportion which lies in the range from 0.01 to 1 % by weight relative to the total of the reactants (a) + (b) + (c) + optionally (d), and
the obligatory additive (f) is employed in a quantity representing from 1 to 60 % of the weight of the total of the constituents (a) + (b) +(c) + (f) + optionally (d).

2. Prepolymers according to claim 1, characterized in that the reactant (a) is taken from the group made up of:
- N,N'-meta-phenylenebismaleimide,
- N,N'-para-phenylenebismaleimide,
- N,N'-4,4'-diphenylmethanebismaleimide.
- N,N'-4,4'-diphenyl ether bismaleimide,
- N,N'-4,4'-diphenyl sulphone bismaleimide,
- N,N'-1,4-cyclohexylenebismaleimide,
- N,N'-4,4'-(1,1-diphenylcyclohexane)bismaleimide,
- N,N'-4,4'-(2,2-diphenylpropane)bismaleimide,
- N,N'-4,4'-triphenylmethanebismaleimide,
- N,N'-2-methyl-1,3-phenylenebismaleimide,
- N,N'-4-methyl-1,3-phenylenebismaleimide,
- N,N'-5-methyl-1,3-phenylenebismaleimide, and
- mixtures thereof.

3. Prepolymers according to either of claims 1 and 2, characterized in that the reactant (b) is taken from the group made up of the siloxane bismaleimides of formula (II) in which:
1) X = -O-; R₁ = R₂ = R₃ = R₄ = R₅ = R₆ = R₇ = R₈ = linear alkyl radical containing from 1 to 3 carbon atoms; x = 2, 3 or 4; y + z lies in the range from 0 to 100 and preferably from 4 to 70;
2) X = -O-; R₁ = R₂ = R₃ = R₄ = R₇ = R₈ = linear alkyl radical containing from 1 to 3 carbon atoms; R₅ = R₆ phenyl radical; x = 2, 3 or 4; y + z lies in the range from 0 to 100 and preferably from 4 to 70;
3) X = -O-; R₁ = R₂ = R₇ = R₈ = linear alkyl radical containing from 1 to 3 carbon atoms; R₃ = R₄ = R₅ = R₆ = phenyl radical; x = 2, 3 or 4; y + z lies in the range from 0 to 100 and preferably from 4 to 70;
4) X = -O-; R₁ = R₂ = R₃ = R₅ = R₇ = R₈ = linear alkyl radical containing from 1 to 3 carbon atoms; R₄ = R₆ = phenyl radical; x = 2, 3 or 4; y + z lies in the range from 0 to 100 and preferably from 4 to 70;
5) X = -O-; R₁ = R₃ = R₅ = R₇ = linear alkyl radical containing from 1 to 3 carbon atoms; R₂ = R₄ = R₆ = R₈ = phenyl radical; x = 2, 3 or 4; y + z lies in the range from 0 to 100 and preferably from 4 to 70.

4. Prepolymers according to any one of claims 1 to 3, characterized in that the amine reactant (c) is taken from the group made up of:
the following species (c1):
- para-phenylenediamine,
- meta-phenylenediamine,
- 4,4'-diaminodiphenylmethane,
- 2,2-bis(4-aminophenyl)propane,
- benzidine,
- bis(4-aminophenyl) ether,
- 4,4'-diaminodiphenyl sulphone, and
- mixtures thereof;
or the following species (c2) and (c3):
- 4,4'-diamino-3,3',5,5'-tetramethyldiphenylmethane,
- 4,4'-diamino-3,3',5,5'-tetraethyldiphenylmethane,
- 4,4'-diamino-3,5-dimethyl-3',5'-diethyldiphenylmethane,
- 4,4'-diamino-3,3'-diethyl-5,5'-dimethyldiphenylmethane,
- 4,4'-diamino-3,3',5,5'-tetraisopropyldiphenylmethane,
- 4,4'-diamino-3,3'-diisopropyl-5,5'-dimethyldiphenylmethane,
- 1,4-bis(4-amino-3,5-dimethyl-α,α-dimethylbenzyl)benzene,
- 1,3-bis(4-amino-3,5-dimethyl-α,α-dimethylbenzyl)benzene,
- 1,3-diamino-2,4-diethyl-6-methylbenzene,
- 1,3-diamino-2-methyl-4,6-diethylbenzene, and
- mixtures thereof.

5. Prepolymers according to any one of claims 1 to 4, characterized in that the acrylate reactant (f1) consists of one or more compound(s) belonging to the following types (f1.1), (f1.2), (f1.3), (f1.4) and (f1.5):
(f1.1) the mono(meth)acrylates corresponding to the formula (VI) in which:
n = 1, and
G denotes a monovalent organic radical of formula: 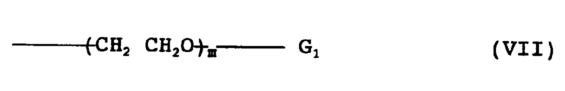 in which : G₁ denotes a linear or branched alkyl radical containing from 1 to 6 carbon atoms or a phenyl radical, and m is an integer equal to zero, 1, 2, 3, 4 or 5;
(f1.2) the di(meth)acrylates corresponding to the formula (VI) in which:
n = 2, and
G denotes a divalent organic radical of formula: 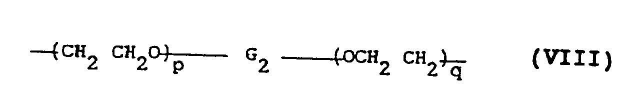 in which: G₂ denotes a linear or branched alkylene divalent radical containing from 2 to 9 carbon atoms and capable of containing one or more oxygen bridge(s) or a radical of formula 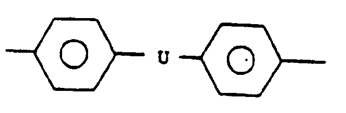 in which the symbol U denotes a single valency bond or a group:
-CH₂-, -CH₂-CH₂-, -CH(CH₃)CH₂-, 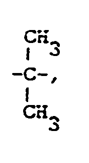 -O-, 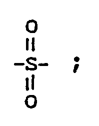 each of the symbols p and q, which are identical or different, denotes an integer equal to zero, 1, 2, 3, 4 or 5;
(f1.3) the tri- and tetra(meth)acrylates corresponding to the formula (VI) in which:
n = 3 or 4, and
G denotes a trivalent or tetravalent organic radical derived from a linear or branched saturated aliphatic residue containing from 3 to 20 carbon atoms and capable of containing one or more oxygen bridge(s) and/or one or more free hydroxyl functional group(s);
(f.1.4) the novolak epoxy(meth)acrylates which, while corresponding to the formula (VI), are here denoted by the following formula: 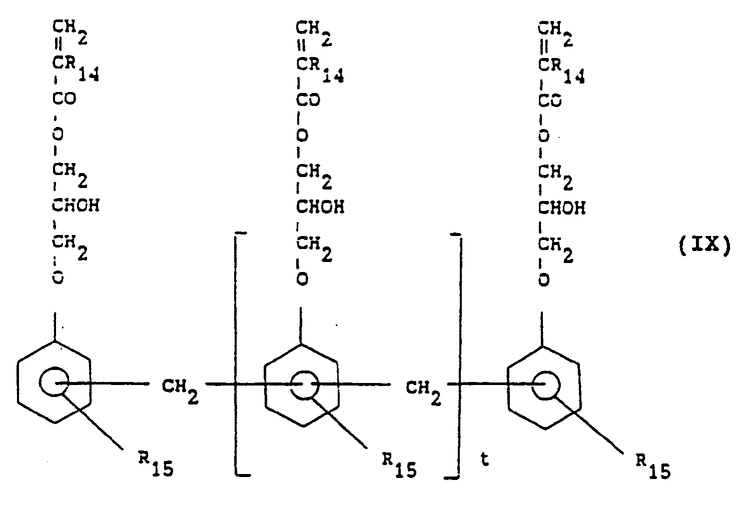 in which:
the symbol R₁₄ has the meaning given above in connection with the formula (VI);
the symbol R₁₅ denotes a hydrogen atom or a methyl radical;
t is a whole or fractional number situated in the range from 0.1 to 7;
(f1.5) mixtures of a number of acrylates and/or methacrylates of the same single type (f1.1), (f1.2), (f1.3) or (f1.4) with each other or mixtures of one or more acrylate(s) and/or methacrylate(s) of the same single type with one or more acrylate(s) and/or methacrylate(s) of another type.

6. Prepolymers according to any one of claims 1 to 5, which consist of the following species:
(d1) either one or more monomer(s) of formula: 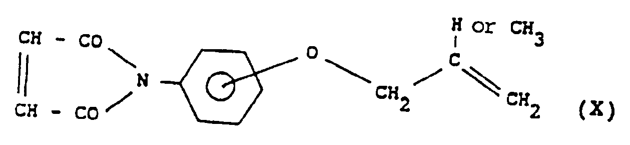 in which the allyloxy or methallyloxy radical is in an ortho, meta or para position in relation to the carbon atom of the benzene ring which is bonded to nitrogen;
(d2) or a compound comprising:
- a mixture of a monomer of formula: 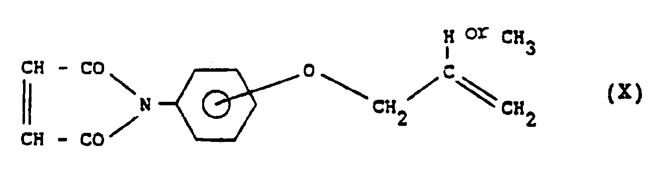 in which the allyloxy or methallyloxy radical is in an ortho, meta or para position in relation to the carbon atom of the benzene ring which is bonded to nitrogen;
- with:
- at least one monosubstituted derivative of formula: 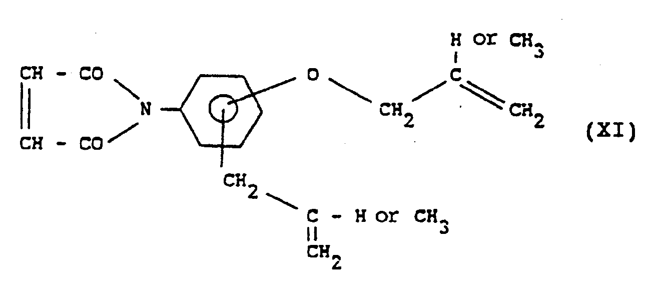
- and optionally one or more disubstituted derivative(s) of formula: 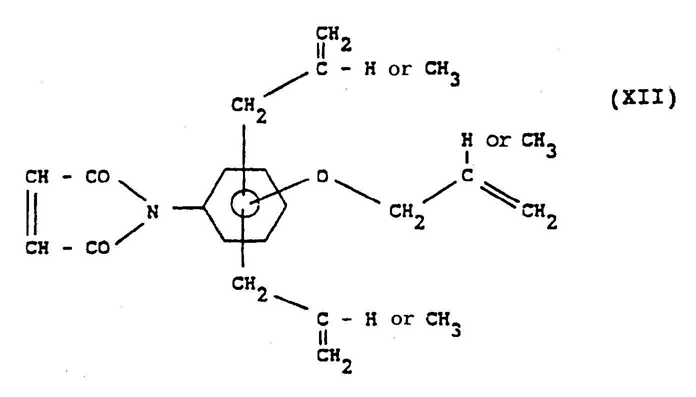
(d3) or one or more substituted heterocyclic ring(s) chosen from vinylpyridines, N-vinylpyrrolidone, allyl isocyanurate, triallyl isocyanurate, vinyltetrahydrofuran, and mixtures thereof,

7. Prepolymers according to any one of claims 1 to 6, characterized in that:
on the one hand: the quantities of reactants (a) and (c) are chosen so as to have, by weight relative to the total weight of these constituents:
- from 70 to 90 % of bismaleimide(s) (a) of formula (I),
- from 10 to 30% of diamine(s) (c) of formulae (III), (IV) and/or (V);
and, on the other hand: with regard to the quantity of siloxane bismaleimide (b) of formula (II), this represents from 5 to 30 % of the total weight of the reactants (a) + (c).

8. Prepolymers according to any one of claims 1 to 7, characterized in that the quantity of the optional reactant (d), when one is used, represents from 5 % to 50 % of the total weight of the reactants (a) + (c).

9. Prepolymers according to any one of claims 1 to 8, characterized in that the optional catalyst (e), when one is used, is employed in a proportion which lies in the range from 0.05 to 0.5 % by weight relative to the total of the reactants (a) + (b) + (c) + optionally (d).

10. Prepolymers according to any one of claims 1 to 9, characterized in that the obligatory additive (f) is employed in a quantity representing from 5 to 30 % of the weight of the total of the constituents (a) + (b) + (c) + (f) + optionally (d).

11. Process for the preparation of the prepolymers according to any one of claims 1 to 10, characterized in that the following stages are linked together:
stage 1: the mixture (a) + (c) is melted, the operation being carried out with stirring and at a temperature of between 50°C and 180°C until a homogeneous liquid mixture is obtained;
then, stage 2, the following are added in succession to the molten mixture, which is stirred and kept at a temperature which is identical with or different from that used in the preceding stage, and which is also between 50°C and 180°C: in a first step, the siloxane bismaleimide (b), then, in a second step, the additive (f), care being taken to maintain a homogeneous liquid mixture; and, once this additive has been introduced, the prepolymer formed is immediately cast outside the reactor which was used for preparing it;
care being taken, furthermore, that, in the case where it is chosen to make use of the optional reactant (d) and/or of the optional catalyst (e), on the one hand, this (or these) constituent(s) is (or are) introduced at the beginning of stage 2 before performing any introduction of the other constituents (b) and (f) and, on the other hand, the reaction mixture is made to react with stirring for a period ranging from 1 minute to 15 minutes before performing the introduction of the other constituents (b) and (f).

12. Application of the prepolymers according to any one of claims 1 to 10 to the manufacture of components using the filament winding technique and to the production of preimpregnated intermediate articles using the technique of solvent-free impregnation of various fibrous materials.
